# EUROPEAN PATENT SPECIFICATION

(11) **EP 4 203 624 B1**
(45) Date of publication and mention of the grant of the patent: **20.05.2026**
(21) Application number: 21216661.5
(22) Date of filing: 21.12.2021
(51) Int. Cl.: H05B 47/19, H05B 47/105, H05B 47/175

(54) **LIGHTING CONTROL**
BELEUCHTUNGSSTEUERUNG
COMMANDE D'ÉCLAIRAGE

(43) Date of publication of application: 28.06.2023
(73) Proprietor: Helvar Oy Ab, 02150 Espoo (FI)
(72) Inventor: JUSLÉN, Henri, 02150 ESPOO (FI); TAKALA, Pasi, 02150 ESPOO (FI)
(74) Representative: Berggren Oy

(56) References cited:
- US-A1- 2008 218 334
- US-A1- 2008 265 799
- US-A1- 2011 199 004
- US-A1- 2014 167 620

## Description

### TECHNICAL FIELD

The example and non-limiting embodiments of the present invention relate to controlling light output of luminaires of a lighting system applicable for illuminating a space based on sensor data obtained in the space.

### BACKGROUND

Many lighting systems applied for illuminating an indoor space and/or an outdoor space involve usage of luminaires that are able to autonomously control at least some aspects of their operation based on environmental characteristics determined via usage of one or more sensors provided in the space. Typical, but non-limiting, examples of sensors applicable for at least partially controlling the light output from luminaires of the lighting system include an occupancy sensor and a light sensor: while occupancy sensors may be applied to switch lights on in response to detecting occupancy in the illuminated space and to switch lights off in response to detecting non-occupancy in the illuminated space, light sensors may be applied to control the light output in view of the ambient light in the space such that a desired level of illumination is provided. Hence, occupancy sensors and light sensors enable at least partially autonomous lighting control that ensures user comfort while minimizing energy consumption.

Sensors applied for lighting control may be arranged in a sensor unit, whereas respective sensor signals obtained from sensors of the sensor unit may be applied for controlling respective light output of one or more luminaires. In one example, the sensor unit is integrated to a luminaire and at least some aspects of the light output of the respective luminaire are controlled based on sensor data obtained from sensors of the integrated sensor unit. Moreover, two or more such luminaires provided with integrated sensor units may be arranged into a luminaire group, where sensor data obtained in any of the luminaires of the luminaire group may be applied in controlling some aspects of respective light outputs of all luminaires of the luminaire group. Examples of such group-based lighting control include switching or keeping on respective light output of all luminaires of the luminaire group in response to any of the sensor units in the luminaires of the luminaire group indicating occupancy and/or switching or keeping off the respective light output of all luminaires of the luminaire group in response to all of the sensor units in the luminaires of the luminaire group indicating non-occupancy.

In another example, the sensor unit may be provided as a stand-alone entity separately from one or more luminaires in its vicinity that constitute a luminaire group, while at least some aspects of respective light outputs of the luminaires of the luminaire group are controlled based on sensor data obtained from sensors of the stand-alone sensor unit. Examples of such group-based lighting control include switching or keeping on respective light output of all luminaires of the luminaire group in response to the stand-alone sensor unit indicating occupancy and/or switching or keeping off the respective light output of all luminaires of the luminaire group in response to the stand-alone sensor unit indicating non-occupancy.

Luminaire grouping may be useful, for example, to ensure sufficient lighting at and close to locations where occupancy is detected and/or to ensure substantially uniform lighting from multiple luminaires that are relatively close to each other in the same space (e.g. in the same room). In a traditional lighting system design the information that defines any luminaire groups applied therein is manually preconfigured into the luminaires and/or sensor units upon installing, configuring or reconfiguring the lighting system to enable the group-based lighting control. However, especially in large lighting systems manual configuration of the luminaires and/or the sensor units to enable the group-based lighting control constitutes a significant effort while the manual configuration procedure is also prone to errors and hence advanced approaches in this regard are highly desirable.

In related art, US 2008/265799 A1 relates to addressing the problem of providing illumination in a manner that is energy efficient and intelligent. In particular, the present invention uses distributed processing across a network of illuminators to control the illumination for a given environment. The network controls the illumination level and pattern in response to light, sound, and motion. The network may also be trained according to uploaded software behavior modules, and subsets of the network may be organized into groups for illumination control and maintenance reporting.

Further in related art, US 2008/218334 A1 discloses a method for determining the relative locations of plural wirelessly controllable building service device nodes and switching control nodes within a building. At least some of the plural building service device nodes are located in different rooms of the building and should be allocated to switching control nodes on a roomspecific basis. Wireless communication is established between the nodes to determine relative spatial positions of selected nodes using received signal strength indication (RSSI) values indicative of a distance of separation between two communicating nodes. The building service device nodes are then grouped into two or more groups, a first group corresponding to service device nodes in one of said different rooms and a second group corresponding to service device nodes in another of said different rooms, based on spatial distribution of service device nodes as indicated by the RSSI values, which are strongly affected by walls separating the rooms. The service device nodes of each group are then allocated to at least one associated switching control node.

Further in related art, US 2014/167620 A1 discloses a lighting network where control of lighting fixtures in the lighting network may be distributed among the lighting fixtures. The lighting fixtures may be broken into groups that are associated with different lighting zones. At least some of the lighting fixtures will have or be associated with one or more sensors. Within the overall lighting network or the various lighting zones, the lighting fixtures may share sensor data from the sensors. Each lighting fixture processes sensor data provided by its own sensor, a remote standalone sensor, or lighting fixture, and processes the sensor data according to the lighting fixture's internal logic to control operation of the lighting fixture. The lighting fixtures may also receive control input from other lighting fixtures, control nodes, light switches, and commissioning tools. The control input is processed along with the sensor data according to the internal logic to enhance control of the lighting fixture.

Further in related art, US 2011/199004 A1 discloses an approach for commissioning a lighting system. A user can be provided with a pointing device capable of emitting or returning a signal which can be received by detectors co-located with each fixture in the lighting system. The user can add a fixture to a group by aiming the pointing device at the fixture when the fixture is not assigned to the group, and the user can remove a fixture from a group in the same way when the fixture was previously assigned to the group.

### SUMMARY

It is an object of the present invention to provide an approach for automated or semi-automated determination of luminaire groups for a lighting system.

According to a first aspect of the invention, a sensor unit for controlling respective light outputs of one or more luminaires arranged for illuminating respective locations of a space is provided, the sensor unit comprising a sensor portion comprising one or more sensors for observing respective environmental characteristics at a location of the space; a communication portion for wireless communication with other devices; and a sensor control portion arranged to: obtain one or more grouping criteria for determining a sensor unit group for the sensor unit, wherein said one or more grouping criteria comprise at least one distance criterion; derive a respective local distance measure for one or more other sensor units based on one or more messages received therefrom at the communication portion, wherein each local distance measure is descriptive of a distance between the sensor unit and the respective other sensor unit; determine the sensor unit group for the sensor unit via assigning thereto, in accordance with the at least one distance criterion, at least one of said one or more other sensor units based on the local distance measure derived therefor; and control the respective light outputs of said one or more luminaires based on sensor data received from the sensor portion and further based on status indications received via the communication portion from the at least one other sensor unit assigned to said sensor unit group, wherein the sensor control portion is arranged to obtain a sensor unit grouping template that defines said one or more grouping criteria via indicating selection of the one or more grouping criteria from a plurality of predefined grouping criteria available for the sensor unit.

According to a second aspect of the invention, a luminaire is provided, the luminaire comprising a sensor unit according to the first aspect of the invention described in the foregoing.

According to a third aspect of the invention, a method in a sensor unit for controlling respective light outputs of one or more luminaires for illuminating respective locations of a space is provided, the method comprising: obtaining one or more grouping criteria for determining a sensor unit group for the sensor unit, wherein said one or more grouping criteria comprise at least one distance criterion; deriving a respective local distance measure for one or more other sensor units based on one or more messages received therefrom at a communication portion of the sensor unit, wherein each local distance measure is descriptive of a distance between the sensor unit and the respective other sensor unit; determining the sensor unit group for the sensor unit via assigning thereto, in accordance with the at least one distance criterion, at least one of the one or more other sensor units based on the local distance measure derived therefor; and controlling the respective light outputs of the one or more luminaires based on the sensor data received from the sensor portion and further based on status indications received via the communication portion from the at least one other sensor unit assigned to said sensor unit group for the sensor unit, wherein obtaining the one or more grouping criteria comprises obtaining a sensor unit grouping template that defines said one or more grouping criteria via indicating selection of the one or more grouping criteria from a plurality of predefined grouping criteria available for the sensor unit.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following examples may be used in combinations other than those explicitly described, unless explicitly stated otherwise.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2A illustrates a block diagram of some components of a luminaire according to an example;
Figure 2B illustrates a block diagram of some components of a sensor unit according to an example;
Figure 3 illustrates a block diagram of some logical components of a lighting system according to an example;
Figure 4 illustrates a block diagram of some components of a luminaire according to an example;
Figure 5 illustrates a method according to an example;
Figure 6 illustrates a floorplan of an illuminated space including spaces of different types; and
Figure 7 illustrates a block diagram of some components of an apparatus according to an example.

### DESCRIPTION OF SOME EMBODIMENTS

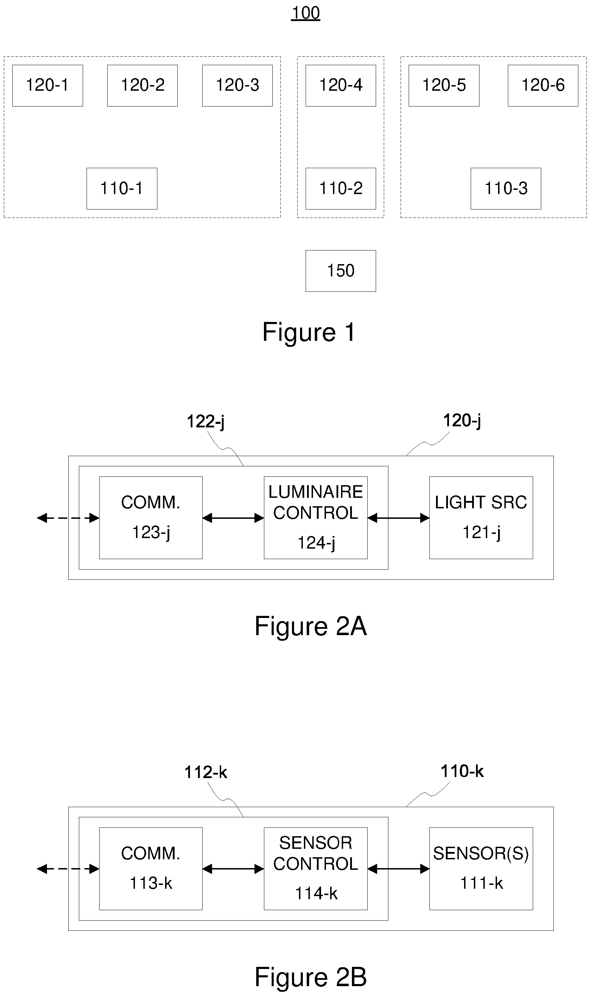

Figure 1 illustrates a block diagram of some components of a lighting system 100 according to an example. The lighting system 100 may be arranged for illuminating a space or area, which may comprise e.g. one or more indoor spaces or areas and/or one or more outdoor spaces or areas. In the following, for brevity of description, the space or area that the lighting system 100 serves to illuminate is referred to as an illuminated space.

In the example of Figure 1 the lighting system 100 is shown with sensor units 110-1, 110-2 and 110-3 and with luminaires 120-1 to 120-6. The example of Figure 1 further illustrates arrangement of the luminaires 120-1 to 120-6 into three luminaire groups, where at least some aspects of each luminaire included in a certain luminaire group may be controlled via operation of respective one of the sensor units 110-1 to 110-3: luminaires 120-1, 120-2 and 120-3 belong to a first luminaire group controlled via operation of the sensor unit 110-1, luminaire 120-4 belongs to a second luminaire group controlled by the sensor unit 110-2, and luminaires 120-5 and 120-6 belong to a third luminaire group controlled via operation of the sensor unit 110-3.

The sensor units 110-1, 110-2 and 110-3 represent a plurality of sensor units 110, where any individual sensor unit may be referred to via a reference number 110-k. Along similar lines, the luminaires 120-1 to 120-6 represent a plurality of luminaires 120, whereas any individual luminaire may be referred to via a reference number 120-j. The plurality of luminaires 120 are arranged for illuminating respective locations of the illuminated space, whereas the plurality of sensor units 110 are arranged for observing one or more environmental characteristics at their respective locations of the illuminated space. In this regard, it is worth noting that the example of Figure 1 serves to illustrate the sensor units 110-k and the luminaires 120-j as respective elements of the lighting system 100 and to illustrate the arrangement of the plurality of luminaires 120 into two or more luminaire groups, where respective luminaires 120-j of each luminaire group are controlled via operation of a respective one of the plurality of sensor units 110, while on the other hand the illustration of Figure 1 does not serve to illustrate any physical characteristics of the sensor units 110-k and/or the luminaires 120-j and/or spatial relationship between the plurality of luminaires 120 and the plurality of sensor units 110.

Each of the plurality of sensor units 110 and each the plurality of luminaires 120 may be considered as a respective element of the lighting system 100, whereas the elements of the lighting system 100 may be communicatively coupled to each other via respective wireless communication links or via a wireless communication network provided using a suitable wireless communication technique known in the art. Due to the communicative couplings to other elements of the lighting system 100, each element of the lighting system 100 may be considered as a node of a lighting network formed by the elements of the lighting system 100.

The example of Figure 1 further illustrates a server 150 that may be optionally included in the lighting system 100. The server 150 may be also referred to as a lighting control server. The plurality of sensor units 110 may be communicatively coupled to the server 150 via respective wireless communication links or via a wireless communication network provided using a suitable wireless communication technique known in the art. In this regard, the server 150 may store lighting control information applicable by the plurality of sensor units 110 and/or the server 150 may carry out one or more procedures that pertain to lighting control in the lighting system 100 on behalf of or in collaboration with one or more of the plurality of sensor units 110.

Along the lines described above, the plurality of luminaires 120 are arranged into a plurality of luminaire groups, where the respective light output from those ones of the plurality of luminaires 120 that are assigned to a certain luminaire group may be at least in part controlled via operation of a sensor unit 110-k assigned for the respective luminaire group. Hence, luminaires 120-j of a certain luminaire group may be referred to as luminaires 120-j assigned to and/or associated with the sensor unit 110-k of the respective luminaire group and, vice versa, the sensor unit 110-k of a certain luminaire group may be referred to as a sensor unit 110-k assigned to and/or associated with the luminaires 120-j of the respective luminaire group. Each luminaire group may have a respective luminaire group identifier (ID) assigned thereto. The luminaire group ID of a luminaire group may comprise a name, a number or an identification of other kind that uniquely identifies the respective luminaire group in the framework of the lighting system 100 and the luminaire group ID may be applied, for example, to identify the respective luminaire group in communication between elements of the lighting system 100, e.g. when addressing the luminaires 120-j and/or the sensor unit 110-k of the respective luminaire group.

Each sensor unit 110-k comprises respective one or more sensors arranged for observing respective environmental characteristics at its location in the illuminated space. Moreover, the luminaires 120-j associated with a certain sensor unit 110-k (e.g. the subset of the plurality of luminaires 120 assigned to the same luminaire group with the sensor unit 110-k) include ones that are located in or close to a sensing area of the one or more sensors of the respective sensor unit 110-k, the one or more sensors of the respective sensor unit 110-k thereby serving to observe environmental characteristic at or close to a portion of the space illuminated by those ones of the luminaires 120-j that are associated with the respective sensor unit 110-k. Hence, the sensor unit 110-k may be considered as an area sensor that serves to control the respective light output of one or more luminaires 120-j that are available for illuminating the area.

Arrangement of the plurality of luminaires 120 into the plurality of luminaire groups may be provided via a manual procedure carried out, for example, upon installation, configuration and/or reconfiguration of the lighting system 100. In another example, an automated procedure for luminaire grouping may be employed e.g. upon installation or in the course of operation of the lighting system 100, e.g. one described in the co-pending patent application no. EP 21216530.2. In the following, various aspects that pertain to determining, for the sensor unit 110-k, a sensor unit group that includes one or more other ones of the plurality of sensor units 110-k and/or to controlling at least some aspects of the respective light outputs of the luminaires 120-j included in the luminaire group of the sensor unit 110-k in accordance with information obtained from the one or more other sensor units assigned to the same sensor unit group with the sensor unit 110-k are described via non-limiting examples.

Figure 2A illustrates a block diagram of some (logical) components of a luminaire 120-j according to an example. The luminaire 120-j may comprise at least one light source 121-j and a luminaire control apparatus 122-j that comprises a communication portion 123-j for wireless communication with other elements of the lighting system 100 and a luminaire control portion 124-j for controlling at least one aspect of operation of the luminaire 120-j in accordance with lighting control information or lighting control commands received via the communication portion 123-j from the sensor unit 110-j assigned to the luminaire 120-j.

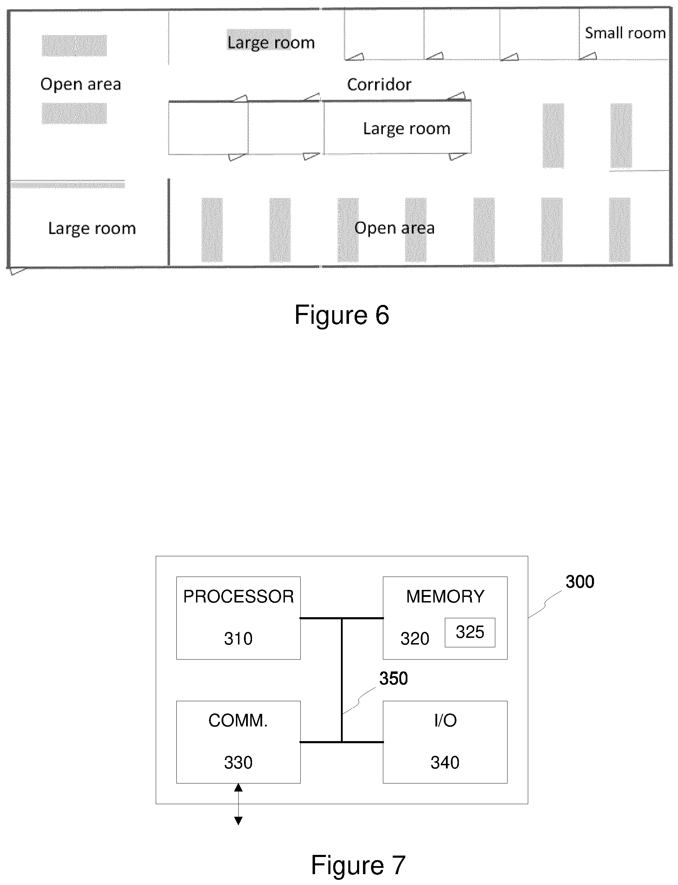

According to an example, the at least one light source 121-j may comprise one or more light emitting diodes (LEDs) and the luminaire control apparatus 122-j may comprise or it may be provided as a LED driver device, whereas in another non-limiting example the at least one light source 121-j may comprise one or more fluorescent lamps and the luminaire control apparatus 122-j may comprise or it may be provided as an electronic ballast. The luminaire control portion 124-j may control one or more aspects of light output of the at least one light source 121-j in accordance with the lighting control information or lighting control commands received via the communication portion 123-j from the sensor unit 110-k assigned to the luminaire 120-j. In an example, the luminaire control portion 124-j may comprise a processor and a memory, where the memory is arranged to store computer program code that, when executed by the processor, causes the luminaire control apparatus 122-j to operate the luminaire 120-j in accordance with the lighting control information or lighting control commands received thereat. More detailed examples of using the processor and the memory for implementing the luminaire control portion 124-j are described later in this text with references to Figure 7.

The luminaire 120-j or an element thereof may have a device ID, e.g. an address, a serial number, a name, etc. assigned to the luminaire 120-j or to an element thereof. The device ID assigned to the luminaire 120-j may be referred to as a luminaire ID of the luminaire 120-j. The luminaire ID may be stored, for example, in a memory provided in the luminaire control apparatus 122-j or in another component of the luminaire 120-j. The luminaire ID assigned to the luminaire 120-k may be applied, for example, to identify the respective luminaire 120-j in communication between elements of the lighting system 100, as described in the following.

Figure 2B illustrates a block diagram of some (logical) components of a sensor unit 110-k according to an example. The sensor unit 110-k may comprise a sensor portion 111-k that comprises one or more sensors and a sensor control apparatus 112-k that comprises a communication portion 113-k for wireless communication with other elements of the lighting system 100 and a sensor control portion 114-k for controlling at least one aspect of operation of the sensor unit 110-k in accordance with sensor information obtained from the sensor portion 111-k and/or in accordance with information received via the communication portion 113-k.

The one or more sensors of the sensor portion 111-k may be communicatively coupled, e.g. via respective electrical wires, to the sensor control apparatus 112-k in order to provide respective sensor signals thereto. The one or more sensors of the sensor portion 111-k may comprise e.g. one or more of the following:
- an occupancy sensor for monitoring occupancy at the location of the sensor unit 110-k, e.g. a passive infrared (PIR) sensor, a microwave radar, a lidar, etc.;
- a light sensor for measuring ambient light level at the location of the sensor unit 110-k, e.g. photodetector such as photodiode;
- a temperature sensor for measuring ambient temperature at the location of the sensor unit 110-k;
- a humidity sensor for measuring air humidity at the location of the sensor unit 110-k;
- a carbon dioxide (CO₂) sensor for measuring a CO₂ level at the location of the sensor unit 110-k;
- a volatile organic compound (VOC) sensor for measuring respective levels of one or more VOCs at the location of the sensor unit 110-k.

Each of the one or more sensors may serve to provide respective sensor data that may be applied by the sensor control portion 114-k for controlling the respective light output of the luminaires 120-j assigned to the sensor unit 110-k.

The sensor control portion 114-k may control at least some aspects of the respective light output of the luminaires 120-j associated with the sensor unit 110-k, where this controlling may rely at least partially on the sensor data obtained from the sensor portion 111-k and/or from information received from the luminaires 120-j of the lighting system 100. In an example, the sensor control portion 114-k may comprise a processor and a memory, where the memory is arranged to store computer program code that, when executed by the processor, causes the sensor control apparatus 112-k to carry out operations that implement the lighting control according to the present disclosure. More detailed examples of using the processor and the memory for implementing the sensor control portion 114-k are described later in this text with references to Figure 7.

In the course of its operation, the sensor control portion 114-k may capture or derive sensor indications based on respective sensor signals received from the sensor portion 111-k and arrange the captured or derived sensor indications into a respective time series of sensor indications. Examples in this regard include deriving occupancy state indications (i.e. respective indications of one of occupancy or non-occupancy) based on the occupancy sensor signal received from the occupancy sensor of the sensor portion 111-k and/or derive light level indications based on the light sensor signal received from the light sensor of the sensor portion 111-k. Consequently, the respective light outputs of the luminaires 120-j associated with the sensor unit 110-k may be carried out based at least in part on one or more time series of sensor indications, e.g. on a time series of occupancy state indications and/or on a time series of light level indications, derived at the sensor control portion 114-k.

**In** an example, the sensor control portion 114-k in the sensor unit 110-k may control respective light outputs of the associated luminaires 120-j based on the one or more time series of sensor indications derived therein. **In** this regard, the lighting control may be carried out in accordance with a predefined lighting control logic that defines one or more lighting control rules, where each lighting control rule may define a respective pair of a triggering condition and a lighting control action to be carried out in response to an occurrence of the triggering condition. As an example, a lighting control rule may define a triggering condition that directly or indirectly pertains to one or more time series of sensor indications derived at the sensor control portion 114-k. The sensor control portion 114-k may implement the lighting control actions by transmitting, via the communication portion 113-k, respective lighting control commands to the associated luminaires 120-j, whereas each of the associated luminaires 120-j may implement the lighting control commands via operation of the luminaire control portion 124-j therein.

In another example, the lighting control logic may be implemented in the respective luminaire control portions 124-j of the associated luminaires 120-j (instead of the sensor control portion 114-k in the sensor unit 110-k implementing the lighting control logic). In such a scenario the sensor control portion 114-k in the sensor unit 110-k may transmit, via the communication portion 113-k, the one or more time series of sensor indications (e.g. the occupancy indications and/or light level indications) derived therein as the lighting control information to the associated luminaires 120-j to facilitate implementing the lighting control rules of the lighting control logic therein. Although described herein using examples that refer to wireless communication between the sensor unit 110-k and the associated luminaires 120-j, in other examples the lighting control information and/or the lighting control commands may be transferred from the sensor unit 110-k to the associated luminaires 120-j via using respective wired links or via using a wired communication network and/or via a wired bus that serves to communicatively connect the associated luminaires 120-j to the sensor unit 110-k.

As a few examples of lighting control actions arising from operation of the lighting control logic for controlling the light output of a certain luminaire 120-j, the lighting control logic may define one or more of the following lighting control rules:
- a first lighting control rule that defines switching on the light output of the respective luminaire 120-j to a predefined target light intensity or otherwise adjusting the light output of the respective luminaire 120-j from a lower light intensity to the target light intensity as a response to the time series of occupancy indications indicating a change of the occupancy state from non-occupancy to occupancy;
- a second lighting control rule that defines adjusting the light output of the respective luminaire 120-j (e.g. from the target light intensity) to a predefined stand-by light intensity (e.g. switching off the light output of the respective luminaire 120-j) in accordance with a predefined dimming curve as a response to the time series of occupancy indications indicating a change of occupancy state from occupancy to non-occupancy;
- a third lighting control rule that defines increasing the light intensity applied for the light output of the respective luminaire 120-j as a response to the time series of light level indications indicating a light level that is below a target light level by more than a predefined margin;
- a fourth lighting control rule that defines decreasing the light intensity applied for the light output of the respective luminaire 120-j as a response to the time series of light level indications indicating a light level that is above the target light level by more than the predefined margin.

The target light intensity, the stand-by light intensity, the target light level and the predefined margin referred to above are predefined lighting control parameters that may be set to respective predefined values e.g. upon manufacturing, installing, configuring or reconfiguring the sensor unit 110-k. The predefined dimming curve referred to above may define adjustment of the light output from the target light intensity to the stand-by lighting intensity via one or more predefined intermediate light intensities over a predefined dimming period for adjusting the light intensity from the target light intensity via the one or more intermediate light intensities to the stand-by light intensity, where the intermediate light intensities and the dimming period may be likewise set upon manufacturing, installing, configuring or reconfiguring the sensor unit 110-k. Moreover, to account for scenarios where the occupancy state remains unchanged, the lighting control logic may comprise respective lighting control rules for keeping on the light output of the respective luminaire 120-j in response to the time series of occupancy indications indicating continued occupancy and/or for keeping off the light output of the respective luminaire 120-j in response to the time series of occupancy indications indicating continued non-occupancy.

The sensor unit 110-k or an element thereof may have a device identifier (ID), e.g. an address, a serial number, a name, etc. assigned to the sensor unit 110-k or to an element thereof. The device ID assigned to the sensor unit 110-k may be referred to as a sensor ID of the sensor unit 110-k. The sensor ID may be stored, for example, in a memory provided in the sensor control apparatus 112-k or in another component of the sensor unit 110-k. The sensor ID assigned to the sensor unit 110-k may be applied, for example, to identify the respective sensor unit 110-k in communication between elements of the lighting system 100.

The sensor control portion 114-k may further operate the communication portion 113-k to transmit status indication messages from the sensor unit 110-k to the other nodes of the lighting network. A status indication message may comprise one or more status indications that are descriptive of current (or recent) operating characteristic of the sensor unit 110 and/or current (or recent) operating characteristic of the luminaires 120-j controlled via operation of the sensor unit 110-k. Conversely, the sensor control portion 114-k may receive status indication messages (and hence status indications) from other ones of the plurality of sensor unit 110, where a status indication transmitted from the sensor unit 110-k may comprise e.g. one of the following:
- an action indication that identifies a lighting control action taken at the luminaires 120-j under control of the sensor unit 110-k, e.g. switching on the light output of the associated luminaires 120-j (e.g. at the target light intensity) or adjusting the light output of the associated luminaires 120-j to the stand-by light intensity, keeping the light output of the associated luminaires 120-j unchanged (e.g. at the target light intensity or at the stand-by light intensity);
- a sensor indication that comprises the current (or the most recent) sensor indication derived at the sensor unit 110-k on basis of a sensor signal received from a respective sensor of the sensor portion 111-k, e.g. the current (or the most recent) occupancy state indication derived on basis of the occupancy sensor signal received from the sensor portion 111-k or the current (or the most recent) light level indication derived on basis of the light sensor signal received from the sensor portion 111-k.

A status indication message may further comprise the sensor ID assigned to the sensor unit 120-k transmitting the status indication message, thereby providing an identification of the sensor unit 120-k to which the status indication(s) conveyed in the status indication message pertain.

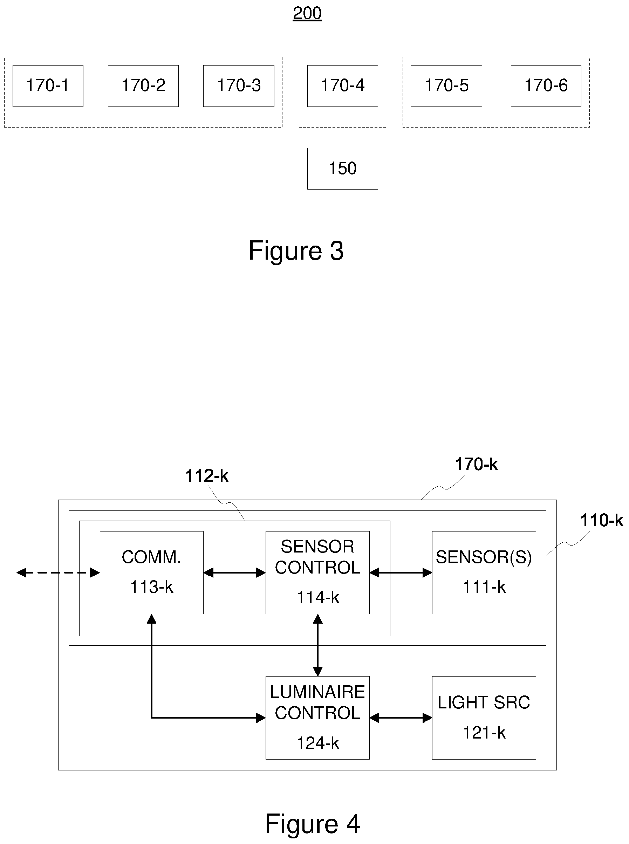

Figure 3 illustrates a block diagram of some components of a lighting system 100 according to another example. In the example of Figure 3 the elements of the lighting system 100 include luminaires 170-1 to 170-6 and the (optional) server 150. The example of Figure 3 further illustrates arrangement of the luminaires 170-1 to 170-6 into three luminaire groups: luminaires 170-1, 170-2 and 170-3 belong to the first luminaire group, luminaire 170-4 belongs to the second luminaire group, and luminaires 170-5 and 170-6 belong to a third luminaire group. The luminaires 170-1 to 170-6 represent a plurality of luminaires 170, whereas any individual luminaire may be referred to via a reference number 170-k. The plurality of luminaires 170 are arranged for illuminating respective locations of the illuminated space and they may be arranged into a plurality of luminaire groups in accordance with their locations with respect to each other and/or in accordance with the locations in the illuminated space such that at least some aspects of the respective light outputs of luminaires 170-k that are located relatively close to each other and/or in the same space may be controlled in a similar manner.

As a difference to operation of the luminaires 110-j described with references to Figures 1, 2A and 2B, the luminaires 170-k have respective sensor units 110-k integrated therein and, consequently, the luminaires 170-k may be arranged to carry out their respective lighting control based at least in sensor signals obtained from the sensor portion 111-k of the sensor unit 110-k integrated therein. Due to this capability of autonomous lighting control the luminaire 170-k may be referred to as an intelligent luminaire or as a smart luminaire.

Figure 4 illustrates a block diagram of some (logical) components of the luminaire 170-k according to an example, including the sensor unit 110-k, the luminaire control portion 124-k and the at least one light source 121-k. The at least one light source 121-k may be similar to the at least one light source 121-j described in the foregoing, whereas the luminaire control portion 124-k may be similar to the luminaire control portion 124-j described in the foregoing apart from receiving the lighting control information or the lighting control commands directly from the sensor control portion 114-k instead of receiving them via the communication portion 113-k. Along similar lines, the sensor control portion 114-k of the sensor unit 110-k integrated to the luminaire 170-k may be similar to the sensor unit 110-k provided as a stand-alone device described in the foregoing apart from passing the lighting control information or the lighting control commands directly to the luminaire control portion 124-k instead of transmitting them via the communication portion 113-k. For consistency of terminology, the luminaire 170-k may be considered as a luminaire that is associated with the sensor unit 110-k integrated therein and, vice versa, the sensor unit integrated to the luminaire 170-k may be considered as a sensor unit that is associated with the luminaire 170-k.

Hence, in the lighting system 100 according to the example of Figure 1 the stand-alone sensor unit 110-k serves to control respective light outputs of one or more luminaires 120-j associated therewith, whereas in the lighting system 100 according to the example of Figure 3 the sensor unit 110-k serves to control the light output of the luminaire 170-k associated therewith. In both scenarios the sensor unit 110-k may have a respective sensor unit group determined therefor, where the sensor unit group includes one or more other sensor units of the plurality of sensor units 110. Conversely, the sensor unit 110-k may be included in respective sensor unit groups determined for one or more other ones of the plurality of sensor units 110, while in some scenarios the sensor unit 110-k may not be included in the respective sensor unit group of any of the other ones of the plurality of sensor units 110. In this regard, respective sensor unit groups determined for sensor units of the lighting system 100 may be asymmetric such that a sensor unit 110-m that is included in the sensor unit group determined for the sensor unit 110-k may or may not have the sensor unit 110-k included in the respective sensor unit group determined therefor.

In this regard, status indications received at the sensor unit 110-k from other sensor units that are included in the sensor unit group determined for the sensor unit 110-k may be applied as basis for controlling respective light output of the luminaires 120-j, 170-k associated with the sensor unit 110-k via operation of one or more further lighting control rules of the lighting control logic applied in the sensor unit 110-k. Conversely, status indications transmitted from the sensor unit 110-k to other luminaires that have the sensor unit 110-k included in the respective sensor unit groups determined therefor may be applicable therein for controlling respective light outputs of luminaires that are associated with respective other sensor unit.

As an example in this regard, the lighting control logic applied in the sensor unit 110-k may comprise a fifth lighting control rule that defines switching on the respective light outputs of the associated luminaires 120-j, 170-k at a secondary target light intensity or otherwise adjusting the respective light outputs of the associated luminaires 120-j, 170-k from a lower light intensity to the secondary target light intensity as a response to another sensor unit of its sensor unit group indicating a change of the occupancy state therein from non-occupancy to occupancy. In this regard, the sensor control portion 114-k in the sensor unit 110-k may derive an occupancy state pertaining to another sensor unit of its sensor unit group e.g. via the one or more of the following events:
- receiving an action indication that indicates another sensor unit of its sensor unit group switching on the respective light outputs of the associated luminaires 121-j, 170-k;
- receiving a sensor indication that comprises an occupancy state indication derived at another sensor unit of its sensor unit group, where the received occupancy state suggest a change from non-occupancy to occupancy at the respective other sensor unit.

Along similar lines, the lighting control logic applied in the sensor unit 110-k may define one or more lighting control rules that are responsive to a change of the occupancy state from occupancy to non-occupancy in one or more other sensor units of its sensor unit group. An example in this regard comprises a sixth lighting control rule that defines adjusting the light output of the associated luminaires 120-j, 170-k (e.g. from the target light intensity) to the stand-by light intensity in accordance with a predefined secondary dimming curve as a response to none of the sensor units of its sensor unit group with the luminaire 170-k having indicated occupancy within a predefined time period. The sensor control portion 114-k in the sensor unit 110-k may derive an occupancy state pertaining to another sensor unit of its sensor unit group e.g. via the one or more of the following events:
- receiving, from those ones of the other sensor units of its sensor unit group for which the most recent action indication indicates the respective other sensor unit having switched or kept on the respective light outputs of the associated luminaires 120-j, 170-k, a respective action indication that indicates the respective other sensor unit adjusting the respective light outputs of the associated luminaires 120-j, 170-k to the stand-by light intensity;
- failing to receive, during the predefined time period, a respective action indication that indicates the respective other sensor unit switching or keeping on the respective light outputs of the associated luminaires 120-j, 170-k from any of the other sensor units of its sensor unit group;
- receiving, from all other sensor units of its sensor unit group, a respective sensor indication that indicates an occupancy state indication derived at respective other sensor unit of its sensor unit group, where the received occupancy state indications suggests a change from occupancy to non-occupancy at the respective other sensor unit.

Hence, the sensor-unit-group-based lighting control may be provided via the sensor control portion 114-k of the sensor unit 110-k monitoring status indications originating from other sensor units included in the sensor unit group determined therefor and controlling the associated luminaires 121-j, 170-k according to the one or more lighting control rules that operate in dependence of the status indications received from other sensor units assigned to its sensor unit group.

As described in the foregoing, the respective communication portions 113-k and 123-j described in the foregoing in context of the sensor unit 110-k and the luminaires 120-j, 170-k may enable wireless communication with other elements of the lighting system 100. In this regard, the communication portion 113-k, 123-j may comprise a respective communication apparatus, e.g. a wireless transceiver, that is capable of communicating with respective communication apparatuses provided in other elements of the lighting system 100 using one or more predefined wireless communication techniques or protocols. The wireless communication may be carried out via using a suitable short-range wireless communication technique known in the art that enables communication over ranges from a few meters up to a few hundred meters. Examples of suitable short-range wireless communication techniques include Bluetooth, Bluetooth Low-Energy (BLE), ZigBee, WLAN/Wi-Fi according to an IEEE 802.11 family of standards, etc. The choice of the wireless communication technique and network topology applied for a specific implementation of the lighting system 100 may depend e.g. on the required communication range and/or requirements with respect to energyefficiency of the communication apparatuses.

A sensor unit grouping procedure according to the present disclosure may comprise an initial sensor unit grouping procedure for determining an initial sensor unit group for the sensor unit 110-k that includes one or more other sensor units of the plurality of sensor units 110, possibly followed by an arbitration procedure that may involve modification of the initial sensor unit group determined for the sensor unit 110-k in view of respective sensor unit groups determined at other ones of the plurality of sensor units 110. In this regard, an aspect of determining one or more sensor unit groups for the lighting system 100 may involve each of the plurality of sensor units 110 carrying out the initial sensor unit grouping procedure to determine the respective initial sensor unit group therein, possibly followed by the arbitration procedure that may result in one or more sensor units 110-k modifying the respective initial sensor unit group determined therein base on the knowledge of respective sensor unit groups determined at other ones of the plurality of sensor units 110 to ensure determining the sensor unit groups in accordance with applicable sensor unit grouping rules or criteria. In general, the sensor unit group determination procedure may apply one or more grouping criteria that are defined via a sensor unit grouping template that is considered applicable for determining the sensor unit group for the sensor unit 110-k. In this regard, the one or more grouping criteria defined via the sensor unit grouping template may comprise at least one distance criterion and the one or more grouping criteria may further comprise at least one group size criterion and/or at least one group composition criterion.

The sensor unit group determined for the sensor unit 110-k may be applied in lighting control such that in addition to the sensor control portion 114-k controlling the respective light outputs of the associated luminaires 120-j, 170-k based on the locally of available sensor data obtained from the sensor portion 111-k, the sensor control portion 114-k may also control the respective light outputs of the associated luminaires 120-j, 170-k based on sensor data captured at respective sensor portions of other sensor units that are included in the luminaire group determined for the sensor unit 110-k. In case of a stand-alone sensor unit 110-k (e.g. according to examples of Figures 1 and 2B), such group-based lighting control by the sensor unit 110-k may result in application of a respective luminaire super-groups that include respective luminaires 120-j assigned to two or more luminaire groups, whereas in case of an integrated sensor unit 110-k (e.g. according to examples of Figures 3 and 4) such group-based lighting control by the sensor unit 110-k may result in application of a respective luminaire group that includes two or more luminaires 170-k. In particular, in case of an integrated sensor unit 110-k the sensor unit group determined therefor may substantially serve as a luminaire group determined for the sensor unit 110-k and, consequently, implement the luminaire grouping illustrated in Figure 3.

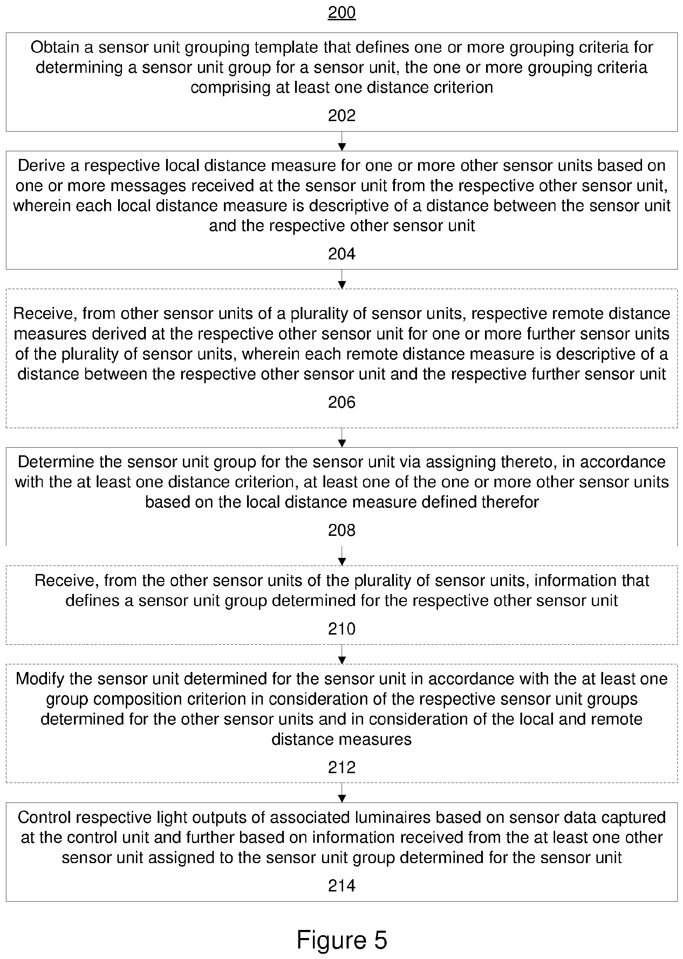

In an example, the sensor unit group determination procedure that includes the initial sensor unit grouping procedure and the arbitration procedure may be carried out via implementing a method 200 illustrated in Figure 5, where the method 200 may comprise the following steps:
- obtaining a sensor unit grouping template that defines one or more grouping criteria for determining the sensor unit group for the sensor unit 110-k, wherein the one or more grouping criteria comprise at least one distance criterion and at least one group composition criterion (block 202);
- deriving a respective local distance measure for one or more other sensor units of the plurality of sensor units 110 based on one or more messages received from the respective other sensor unit at the communication portion 113-k, wherein each local distance measure is descriptive of a distance between the sensor unit 110-k and the respective other sensor unit (block 204);
- receiving, from other sensor units of the plurality of sensor units 110 via the communication portion 113-k, respective remote distance measures derived at the respective other sensor unit for one or more further sensor units of the plurality of sensor units 110, wherein each remote distance measure is descriptive of a distance between the respective other sensor unit and the respective further sensor unit (block 206);
- determining the sensor unit group for the sensor unit 110-k via assigning thereto, in accordance with at least one or more distance criterion, at least one of the one or more other sensor units based on the local distance measure defined therefor (block 208);
- receiving, from the e other sensor units of the plurality of sensor units 110 via the communication portion 113-k, information that defines a sensor unit group determined for the respective other sensor unit (block 210);
- modifying the sensor unit group determined for the sensor unit 110-k in accordance with the at least one group composition criterion in consideration of the respective sensor unit groups determined for the other sensor units and in consideration of the local and remote distance measures (block 212); and
- controlling the respective light outputs of the associated luminaires 120-j, 170-k based on the sensor data received from the sensor portion 111-k and further based on information received via the communication portion 113-k from the at least one other sensor unit assigned to the sensor unit group determined for the sensor unit 110-k (block 214).

The respective operations described with references to the method steps represented by blocks 202 to 214 may be varied or complemented in a number of ways, the method 200 may be complemented with one or more additional steps, the order of carrying out at least some of the method steps may be different from that depicted in Figure 5 and/or some of the steps may be omitted without departing from the scope of the sensor unit group determination technique described in the present disclosure. As an example in this regard, the aspect of determining the (initial) sensor unit group for the sensor unit 110-k (cf. block 208) may be carried out before receiving the respective remote distance measures from the one or more other sensor units (cf. block 206). As another example in this regard, in some examples the method 200 as described above includes both the initial sensor unit grouping procedure (blocks 202, 204 and 208) and the arbitration procedure (blocks 206, 210 and 212), whereas in some examples only the initial sensor unit grouping procedure may be carried out while omitting the arbitration procedure. In such a variation of the method 200, the applied sensor unit grouping template (cf. block 202) defines the at least one distance criteria while it may or may not define the one or more group composition criteria. In the following, however, the method 200 is described with references to both the initial sensor unit grouping procedure and the arbitration procedure.

Moreover, even though the sensor unit grouping procedure is predominantly described herein with references to the sensor unit 110-k in singular, the description equally applies to any or each sensor unit of the plurality of sensor units 110. In other words, the sensor unit group determination procedure according to the method 200 may be carried out in each of the plurality of sensor units 110 with the aim of finding one or more other sensor units that are suitable for assignment in the sensor unit group of the respective one of the plurality of sensor units 110. Yet further, in the following examples it is assumed that the method 200 is carried out via operation of the sensor control portion 114-k of the sensor unit 110-k, whereas in other examples the method 200 may be carried by another entity of the sensor unit 110-k or by another element included in or coupled to the lighting system 100.

The sensor unit grouping template applied for determining the sensor unit group for the sensor unit 110-k via operation of the method 200 as well as the one or more grouping criteria defined via the applied sensor unit grouping template may be predefined ones in that they may be set or selected before carrying out the method 200, e.g. as part of manufacturing the sensor unit 110-k before providing the sensor unit 110-k for installation as part of the lighting system 100 or upon installing, configuring or reconfiguring the lighting system 100 and/or the sensor unit 110-k. As an example, the applied sensor unit grouping template may define the one or more grouping criteria via indicating one or more grouping criteria to be applied for the sensor unit 110-k from a plurality of predefined grouping criteria available for the sensor unit 110-k. The plurality of predefined grouping criteria may be made available for the sensor unit 110-k via storing them in a memory provided in the sensor control apparatus 112-k or in another component of the sensor unit 110-k. In this regard, the plurality of predefined grouping criteria available for the sensor unit 110-k may comprise
- one or more predefined distance criteria,
- one or more predefined group size criteria,
- one or more predefined group composition criteria,
whereas the applied sensor unit group template may indicate selection of at least one of the one or more predefined distance criteria and it may further indicate respective selection of at least one of the one or more predefined group size criteria and/or at least one of the one or more predefined group composition criteria. Respective non-limiting examples of applicable distance criteria, group size criteria and group composition criteria are described in the following.

As an example in this regard, information that defines the sensor unit grouping template to be applied for determining the sensor unit group for the sensor unit 110-k may be stored in the memory in the sensor control apparatus 112-k, whereas the aspect of obtaining the sensor unit grouping template, and hence obtaining the one or more grouping criteria, to be applied for the sensor unit 110-k (cf. block 202) may comprise reading the information that defines the applicable sensor unit grouping template from the memory. Herein, the sensor unit grouping template pre-selected for the sensor unit 110-k may be one of a plurality of different sensor unit grouping templates, where each sensor unit grouping template defines a respective selection from the one or more predefined grouping criteria that is different from respective selections defined by other ones of the plurality of sensor unit grouping templates. The plurality of sensor unit grouping templates may define respective different sets of one or more grouping criteria that are considered suitable for spaces of different types and/or purposes, such as office rooms, open office spaces, meeting rooms, corridors, garages, warehouses, etc. Moreover, there may be different sets of grouping criteria defined for certain space types in different sizes, such as small and large office rooms, small and large meeting rooms, small and large open office spaces, etc. In this regard, the respective sensor unit grouping template defined for a certain type of space may comprise any combination of the grouping criteria considered suitable for the respective space.

As another example of obtaining the sensor unit grouping template to be applied for the sensor unit 110-k (cf. block 202), the memory in the sensor control apparatus 112-k may store information that defines the plurality of sensor unit grouping templates described above or a predefined subset thereof, whereas the sensor control potion 114-k may receive an indication of the sensor unit grouping template to be selected for application for the sensor unit 110-k. In this regard, the selection among the sensor unit grouping templates available for the sensor unit 110-k in the memory therein may be received, for example, via a user interface (UI) of the sensor unit 110-k or in a control signal or command received via the communication portion 113-k.

Each of the plurality of sensor unit grouping templates may be assigned a template ID that may be applied to identify a template type of the respective sensor unit grouping template e.g. in communication between the plurality of sensor units 110, where the template ID may comprise a name, a number or an identification of other kind that uniquely identifies the template type of the respective sensor unit grouping template in the framework of the lighting system 100. In this regard, the template type indicated for the sensor unit grouping template via the template ID assigned thereto may represent the type of space for which the respective sensor unit grouping template is intended for, e.g. one of the following: a small office room, a large office room, a small open office space, a large open office space, a small meeting room, a large meeting room, a corridor, a garage, a warehouse, etc.

Moreover, each of the plurality of sensor unit grouping templates may be assigned a respective template priority that indicates its priority in relation to sensor unit templates applied by other ones of the plurality of sensor units 110. The template priority may reflect the relative importance of the type of space for which the respective sensor unit grouping template is intended for and hence it may be applied to rank the plurality of sensor units 110 into an order of importance via the respective sensor unit grouping templates applied therein e.g. in a scenario where a certain another sensor unit needs to be assigned to the sensor unit group of the sensor unit 110-k or to a sensor unit group of another one of the plurality of sensor units 110. Additionally or alternatively, each of the plurality of sensor units 110 may be assigned a respective sensor unit priority that indicates its priority in relation to other ones of the plurality of sensor units 110, thereby enabling ranking of the plurality of sensor units 110 into an order of importance when assigning a certain another sensor unit to the sensor unit group of the sensor unit 110-k or to a sensor unit group of another one of the plurality of sensor units 110.

Yet further, each of the one or more grouping criteria defined via a sensor unit grouping template may be assigned a respective criterion priority that indicates its priority in relation to other ones of the one or more grouping criteria defined via the respective sensor unit grouping template. The criterion priority may be applied to rank the respective grouping criteria defined via the respective sensor unit grouping template into an order of importance, thereby allowing prioritization of the grouping criteria defined via the respective sensor unit grouping template with respect to each other e.g. in a scenario where the applied grouping criteria impose conflicting requirements that cannot be simultaneously fulfilled. In such a scenario, the respective criterion priorities assigned to the one or more grouping criteria defined in the applied sensor unit grouping template may be applied in assignment of at least one of the one or more other sensor units to the sensor unit group of the sensor unit 110-k such that in a scenario where two grouping criteria defined in the applied sensor unit groping template cannot be simultaneously met, the grouping criterion that has a higher criterion priority is complied with while the grouping criterion that has a lower criterion priority is ignored or complied with to extent possible.

Referring now back to operations that pertain to block 204, in various examples, the aspect of deriving the respective local distance measures for the one or more other sensor units of the plurality of sensor units 110 may rely on one or more ID messages received from the respective other sensor units at the communication portion 113-k of the sensor unit 110-k. In the following, for clarity of description, these one or more other sensor units are referred to as a first subset of the plurality of sensor units 110 or, in brief, as the first subset. Herein, the first subset may comprise all those (other) ones of the plurality of sensor units 110 from which the sensor unit 110-k has received at least a predefined number of ID messages (e.g. at least one ID message) within an observation period. Hence, in some examples the first subset may include those (other) ones of the plurality of sensor units 110 that are within a communication range from the sensor unit 110-k. The ID message transmitted from the sensor unit 110-k (and from any one of the plurality of sensor units 110) includes at least the sensor ID of the sensor unit 110-k and it may further include one of the following: the number of luminaires controlled by the sensor unit 110-k, the template ID of the sensor unit grouping template applied in the sensor unit 110-k, the template priority assigned to the sensor unit grouping template applied in the sensor unit 110-k, the sensor unit priority assigned to the sensor unit 110-k.

In one example, the ID message is transmitted from the communication portion 113-k of the sensor unit 110-k at a predefined reference transmission (TX) power, which is known by the respective sensor control portions 114of the plurality of sensor units 110. In another example, the ID message is transmitted at a TX power chosen by the sensor control portion 114-k or by the communication portion 113-k of the sensor unit 110-k and an indication of the applied TX power is included in the ID message to make also the respective sensor control portions 114 of the plurality of sensor units 110 aware of the applied TX power, thereby enabling normalization of the received signal power in view of the reference TX power.

In one example, the sensor control portion 114-k in the sensor unit 110-k may operate the communication portion 113-k to transmit ID messages according to a predefined schedule, e.g. at predefined time intervals. In another example, alternatively or additionally, the sensor control portion 114-k in the sensor unit 110-k may operate the communication portion 113-k to transmit a predefined number of ID messages according to a predefined schedule in response to receiving an ID request via the communication portion 113-k. In this regard, the sensor control portion 114-k in the sensor unit 110-k may operate the communication portion 113-k to transmit (e.g. broadcast) an ID request or a series of ID requests upon initiating the group determination procedure.

The local distance measure for a certain other sensor unit may be derived based on respective distance values derived for one or more individual ID messages received at the sensor unit 110-k from the respective other sensor unit, e.g. as a statistical measure such as a minimum, an average, a median or a maximum of the distance values under consideration. Moreover, in addition to or instead of deriving the local distance measure for a certain other sensor unit, a local distance stability measure for the respective other sensor unit may be derived based on the respective distance values derived for the one or more individual ID messages received at the sensor unit 110-k from the respective other sensor unit, where the distance stability measure may be derived as (another) statistical measure of the distance values under consideration. Non-limiting examples of an applicable distance value comprise a received signal strength indication (RSSI) value derived based on a received ID message, a hop count value derived based on the received ID message, and a time of flight value derived based on the received ID message. For clarity and brevity of description, the examples provided in the following are predominantly described with references to a RSSI-based distance estimation, whereas application of other distance estimation approaches (such as ones based on hop count or time of flight) is briefly described separately thereafter.

The RSSI measure for a certain other sensor unit may be computed based on respective RSSI values derived for one or more ID messages received from the respective other sensor unit at the communication portion of the sensor unit 110-k. In case the TX power applied at the other sensor unit 110-k for transmitting the respective ID message is different from the reference TX power (and hence indicted in the ID message), derivation of the RSSI value may further involve scaling or normalization of the RSSI value in accordance with the difference between the applied TX power and the reference TX power before using the respective RSSI value for computation the RSSI measure. The RSSI measure for the other sensor unit may be computed e.g. as an average or as a median of the respective RSSI values derived for the one or more ID messages under consideration. Hence, a RSSI measure having a high(er) value indicates a short(er) distance between the sensor unit 110-k and the other sensor unit while a RSSI measure having a low(er) value indicates a long(er) distance between the sensor unit 110-k and the other sensor unit, the RSSI measure thereby serving as an indication of the distance between these two elements of the lighting system 100 e.g. in scenarios where the sensor unit 110-k receives the ID messages directly from the other sensor units (i.e. without the ID messages being relayed by intermediate nodes of the lighting network).

In examples where the RSSI measure is applied as the distance measure, the local distance stability measure, if applied, may comprise a RSSI stability measure, which may be computed based on the respective RSSI values derived for the one or more ID messages under consideration. As an example in this regard, the RSSI stability measure for another sensor unit may be defined based a difference between a minimum RSSI value and an average of the RSSI values derived for the other sensor unit, e.g. as a ratio of the minimum RSSI value to the average of the RSSI values. As examples in this regard, the minimum RSSI value may be defined as the smallest one of the RSSI values under consideration or as an average of the lowest decile of the RSSI values under consideration. In this regard, a RSSI stability measure having a relatively high value may be considered as an indication of a transmission path whose characteristics remain substantially constant over time due to relatively short and/or unobstructed path between the sensor unit 110-k and the other sensor unit, whereas a RSSI stability measure having a relatively low value may be considered as an indication of a transmission path whose characteristics vary over time due to relatively long and/or temporally obstructed path between the sensor unit 110-k and the other sensor unit, where the variation may at least in part be caused due to a door between the sensor unit 110-k and the other sensor unit being opened and closed.

In some examples, derivation of the respective local distance measures and/or the respective local distance stability measures for the one or more other sensor units of the first subset may be followed by transmitting, e.g. broadcasting, information regarding the one or more other sensor units of the first subset. As an example in this regard, the information regarding a certain other sensor unit of the first subset may comprise, for each other sensor unit of the first subset, the sensor ID of the respective other sensor unit, the local distance measure (e.g. the local RSSI measure) derived for the respective other sensor unit and, optionally, the local distance stability measure (e.g. the local RSSI stability measure) derived for the respective other sensor unit. This information may be conveyed from the sensor unit 110-k in one or more distance information messages transmitted via the communication portion 113-k, wherein the transmitted messages may further include the sensor ID of the sensor unit 110-k to identify the sensor unit 110-k as the origin of the conveyed information and/or the number of luminaires controlled by the sensor unit 110-k.

The other ones of the plurality of sensor units 110 of the lighting system 100 may likewise derive therein respective local distance measures and/or respective local distance stability measures (e.g. the respective local RSSI measures and/or the respective local RSSI stability measures) for one or more other sensor units of the plurality of sensor units 110 and transmit, e.g. broadcast, this information in one or more distance information messages of the type described above for reception by the other elements of the lighting system 100. In this regard, these one or more other sensor units considered by the respective other sensor unit may be referred to as a respective second subset of the plurality of sensor units 110, whereas the second subset is typically different from the first subset considered at the sensor unit 110-k. In viewpoint of the sensor unit 110-k the local distance measures and/or the local distance stability measures derived at a certain other sensor unit constitute corresponding remote distance measures and/or remote distance stability measures. Hence, the sensor control portion 114-k of the sensor unit 110-k may receive, from the other sensor units of the lighting system 100, via the communication portion 113-k, the respective remote distance measures (e.g. the respective remote RSSI measures) and/or the respective remote distance stability measures (e.g. the respective remote RSSI stability measures) derived at the respective other sensor unit for the one or more sensor units of the respective second subset of the plurality of sensor units 110 (cf. block 206).

As the information pertaining to the remote distance measures and/or the remote distance stability measures derived at a certain other sensor unit is received at the sensor unit 110-k in one or more distance information messages of the type described above, the received information also includes the sensor ID of the other sensor unit having transmitted the respective sensor information message(s) and the respective sensor IDs of the one or more other sensor units considered in the respective other sensor unit, e.g. the respective sensor IDs of those ones of the plurality of sensor units 110 that are within a communication range from the respective other sensor unit. Consequently, with reception of the respective distance information messages from the one or more other sensor units at the sensor unit 110-k the sensor control portion 114-k also acquires (further) information of the respective sensor IDs of the plurality of sensor units 110.

Referring now to the at least one distance criterion that is applicable e.g. for the sensor unit group determination in accordance with operations pertaining to block 208, the one or more distance criteria that are available for the sensor unit 110-k may comprise, for example, one or more of the following:
- a first distance criterion that defines a predefined distance measure threshold (e.g. a RSSI threshold) that indicates a maximum allowable distance between the sensor unit 110-k and a given other sensor unit (e.g. a minimum allowable value for the local RSSI measure);
- a second distance criterion that defines a predefined distance difference measure threshold (e.g. a RSSI difference threshold) that indicates a maximum allowable value for a distance difference measure (e.g. the RSSI difference measure), where the distance difference measure for a given other sensor unit of the first subset is derived as a difference between the highest local distance measure (e.g. the highest local RSSI measure) derived for any other sensor unit of the first subset and the local distance measure (e.g. the local RSSI measure) derived for the respective other sensor unit;
- a third distance criterion that defines a predefined distance measure stability threshold (e.g. a RSSI stability threshold) that indicates a minimum allowable value for the distance stability measure (e.g. the local RSSI stability value), wherein the distance stability measure is derived based on a difference between a minimum distance value (e.g. a minimum RSSI value) derived for a given other sensor unit and an average of the distance values (an average of the RSSI values) derived for the respective other sensor unit.

Hence, the at least one distance criterion defined in the applied sensor unit grouping template for application in determination of the sensor unit group for the sensor unit 110-k (cf. block 208) may comprise, for example, one or more of the first, second and third distance criteria described above.

In the second distance criterion described above, in an example, the distance difference measure for a given other sensor unit may comprise an absolute difference between the highest local distance measure derived for any other sensor unit of the first subset and the local distance measure derived for the respective other sensor unit, whereas in another example it may comprise a ratio of the highest local distance measure derived for any other sensor unit of the first subset to the local distance measure derived for the respective other sensor unit, where the applied distance measure stability threshold may be set or selected in accordance of the type of difference (absolute or ratio) applied for determining the distance difference measure.

In an example, the one or more predefined distance criteria that are available for the sensor unit 110-k may include two or more instances of the first, second and/or third distance criteria, even though these exemplifying criteria are described in the foregoing in singular. Consequently, the at least one distance criterion defined in the applied sensor unit grouping template may define usage of one of the two or more instance of the respective one of the first, second and/or third distance criteria. In this regard, two instances of the respective one of the first, second and/or third distance criteria apply different values for the respective threshold applied therein. Considering the second distance criterion as an example, a first instance of the second distance threshold may apply a first predefined distance difference measure threshold (e.g. a first RSSI difference threshold) and a second instance of the second distance threshold may apply a second predefined distance difference measure threshold (e.g. a second RSSI difference threshold), where the first predefined distance difference measure is different from the second predefined distance difference measure.

In another example, the one or more predefined distance criteria included in the plurality of grouping criteria may include a single instance of the first, second and/or third distance criteria, where the respective threshold value may be defined as a respective parameter of the sensor unit grouping template defining application of one or more of these criteria. Examples in this regard include the following:
- a sensor unit grouping template that defines usage of the first distance criterion may also define a value for the predefined distance measure threshold (e.g. the RSSI threshold) via a respective parameter of the sensor unit grouping template,
- a sensor unit grouping template that defines usage of the second distance criterion may also define a value for the predefined distance difference measure threshold (e.g. the RSSI difference threshold) via a respective parameter of the sensor unit grouping template,
- a sensor unit grouping template that defines usage of the third distance criterion may also define a value for the predefined distance measure stability threshold (e.g. the RSSI stability threshold) via a respective parameter of the sensor unit grouping template.

Usage of respective parameter(s) of the sensor unit grouping template enables setting or adjusting the value(s) applied for the respective one(s) of the predefined distance measure threshold, the predefined distance difference measure threshold and/or the predefined distance measure stability threshold in accordance with characteristics of the operating environment of the sensor unit 110-k. The applied parameter value(s) may be set, for example, via the UI of the sensor unit 110-k or via one or more control signals or commands received at the sensor unit 110-k via the communication portion 113-k.

Still referring to operations that pertain to block 206, determination of the sensor unit group for the sensor unit 110-k in accordance with the at least one distance criterion may comprise selecting one or more other sensor units of the first subset that meet the at least one distance criterion and it may result in assigning those other sensors of the first subset that are relatively close to the sensor unit 110-k and/or relatively close to each other to form the sensor unit group for the sensor unit 110-k and hence constitute other sensor units that are considered to capture sensor data that is also applicable for controlling some aspects of the light output of the luminaires 120-j, 170-k associated with the sensor unit 110-k.

Along the lines described in the foregoing, the one or more grouping criteria defined in the applied sensor unit grouping template may further comprise at least one group size criterion, whereas the assignment of one or more other sensor units of the first subset to the sensor unit group being determined for the sensor unit 110-k may be carried out further in accordance with the at least one group size criterion, e.g. such that the at least one group size criterion is met. Further along the lines described in the foregoing, the applied sensor unit grouping template may define the at least one group size criteria as a selection from the one or more predefined group size criteria that may comprise, for example, one or more of the following:
- a first group size criterion that defines a minimum allowable number of other sensor units to be assigned to the sensor unit group of the sensor unit 110-k,
- a second group size criterion that defines a maximum number of other sensor units to be assigned to the sensor unit group of the sensor unit 110-k.

In some scenarios, application of the at least one distance criterion and the at least one group size criterion defined in the applied sensor unit grouping template may impose conflicting requirements e.g. such that all those other sensor units that are included in the first subset and that meet the at least one distance criterion cannot be accommodated in the sensor unit group being determined for the sensor unit 110-k such that the at least one group size criterion is also met or such that there is an insufficient number of other sensor units in the first subset that meet the at least one distance criterion in order to also meet the at least one group size criterion. As an example of accounting for such scenarios, the respective criterion priorities possibly assigned to the one or more grouping criteria defined in the applied sensor unit grouping template may be applied in assignment of the other sensor units included in the first subset to the sensor unit group of the sensor unit 110-k in a manner described in the foregoing. In a particular example in this regard, in a scenario where application of the at least one group size criterion results in selecting less than all those other sensor units of the first subset that meet the at least one distance criterion, those other sensor units for which the distance criterion having the highest criterion priority among the at least one distance criterion indicates the most favorable distance characteristic may be selected (or, conversely, those other sensor units for which the distance criterion having the highest criterion priority among the at least one distance criterion indicates the least favorable distance characteristic may be left unselected).

In an example, the one or more predefined group composition criteria that are available for the sensor unit 110-k may comprise a first group composition criterion that defines one or more template types allowable for grouping with sensor unit 110-k and, hence, the at least one group composition criteria defined in the applied sensor unit grouping template may comprise the first group composition criterion and, consequently, the first group composition criterion may be applied as part of determining the sensor unit group for the sensor unit (cf. block 208). In an example, the one or more allowable template types defined via the first group composition criterion may be provided as a fixed predefined characteristic of a given sensor unit grouping template, whereas in another example the one or more allowable template types defined via the first group composition criterion may be set for the sensor unit grouping template applied in the sensor unit 110-k via a parameter of the applied sensor unit grouping template, where the value for such parameter may be received e.g. via the UI of the sensor unit 110-k or via one or more control signals or commands received at the sensor unit 110-k via the communication portion 113-k.

The first group composition criterion may define the one or more allowable template types via respective template IDs of the one or more template types that are allowable for grouping with the sensor unit 110-k. In this regard, the one or more allowable template types may or may not include the template type assigned to the sensor unit grouping template applied for the sensor unit 110-k. Consequently, in case the first group composition criterion is included in the applied sensor unit grouping template, determination of the sensor unit group for the sensor unit 110-k may consider only those other sensor units of the first subset for which a template type matching one of the allowable template types is indicated (e.g. in respective **ID** messages received from the respective other sensor units of the first subset).

In an example, the one or more predefined group composition criteria that are available for the sensor unit 110-k may comprise a second group composition criterion that defines application of substantially even sized sensor unit groups across the plurality of sensor units 110 of the lighting system 100r. Hence, the at least one group composition criteria defined in the applied sensor unit grouping template may comprise the second group composition criterion and, consequently, the second group composition criterion may be applied as part of determining the sensor unit group for the sensor unit 110-k (cf. block 208). If the second group composition criterion is included in the at least one group composition criterion, any group size criteria possibly included in the applied sensor unit grouping template may be omitted or the second group composition criterion may be assigned a higher criterion priority than the any of the one or more group size criteria possibly defined in the applied sensor unit grouping template.

As an example, application of the second group composition criterion may comprise the following:
- determine the number of sensor units in the lighting system 100 and the number of luminaires 120-j in the lighting system 100,
- compute a target size N for the sensor unit group based on the determined number of luminaires and the determined number of sensor units, and
- assign N other sensor units of the first subset to the sensor unit group being determined for the sensor unit 110-k.

In the above-described procedure for applying the second group composition criterion, the respective numbers of the luminaires and sensor units in the lighting system 100 may be derived based on information included in the ID messages and/or in the distance information messages received from the other sensor units of the lighting system 100. Moreover, the target size N may be computed e.g. by dividing the determined number of luminaires by the determined number of sensor units, possibly rounded to the nearest integer if necessary.

The above example describes application of the second group composition criterion as a procedure that may be applied as part of determining the initial sensor unit group for the sensor unit 110-k via operations that pertain to block 208. In this regard, it is worth noting that possible subsequent modification of the initial sensor unit group via application of another group composition criterion (cf. block 212) may result in assigning one or more additional other sensor units to and/or unassigning one or more other sensor units from the initial sensor unit group, provided that the other group composition criterion is assigned a criterion priority higher than that assigned to the second group composition criteria. In another example, the second group composition criterion may be applied as part of modifying the initial sensor unit group as part of operations that pertain to block 212.

Determination of the (initial) luminaire group for the sensor unit 110-k may be followed by transmitting, e.g. broadcasting, information that defines the sensor unit group determined for the sensor unit 110-k in order to make the other elements of the lighting system 100 aware of the sensor unit group initially determined for the sensor unit 110-k. As an example in this regard, the transmitted information may comprise the respective sensor IDs of those other sensor units that are assigned to the sensor unit group of the sensor unit 110-k. This information may be conveyed from the sensor unit 110-k in one or more sensor unit group information messages transmitted via the communication portion 113-k, wherein the transmitted sensor unit group information messages may further include the sensor ID of the sensor unit 110-k to identify the sensor unit 110-k as the origin of the conveyed information.

The other sensor units of the lighting system 100 may likewise determine their respective (initial) sensor unit groups and transmit, e.g. broadcast, this information in one or more sensor unit group information messages of the type described above for reception by the other elements of the lighting system 100. Consequently, the aspect of receiving the information that defines the respective sensor unit groups determined for the one or more other sensor units (cf. block 210) may comprise receiving the respective one or more sensor unit group information messages from the one or more other sensor units via the communication portion 113-k and extracting from the received sensor unit group information messages, for each of the other sensor units, the sensor ID assigned thereto and the respective sensor IDs of those ones of plurality of sensor units 110 that are assigned to the sensor unit group determined for the respective other sensor unit.

Referring now to operations pertaining to block 212, the aspect of modifying the (initial) sensor unit group determined for the sensor unit 110-k via operations that pertain to block 208 may comprise assigning one or more additional other sensor units to the sensor unit group initially determined for the sensor unit 110-k and/or removing (e.g. unassigning) one or more sensor units from the sensor unit group initially determined for the sensor unit 110-k via application of the at least one group composition criterion. In this regard, assigning one or more additional sensor units to the sensor unit group and/or removing (e.g. unassigning) one or more sensor units from the sensor unit group may be carried out in consideration of those ones of the plurality of sensor units 110 assigned to the respective sensor unit groups determined for the one or more other sensor units in view of the local and remote distance measures available at the sensor control portion 114-k.

In this regard, in some examples the second group composition criterion that defines application of substantially equal sized sensor unit groups across the plurality of sensor units 110 of the lighting system 100 may have been already applied as part of determination of the initial sensor unit group for the sensor unit 110-k (cf. block 208) and hence the second group composition criteria, if included in the one or more grouping criteria defined in the applied sensor unit grouping template, may not be re-applied as part of sensor unit group modification (cf. block 212). Conversely, in another example, if the second group composition criterion is included in the one or more grouping criteria defined in the applied sensor unit grouping template but it is not applied as part of determination of the initial sensor unit group for the sensor unit 110-k, the second group composition criterion may be applied (e.g. as described in the foregoing) as part of modifying the initial sensor unit group.

In an example, the one or more predefined group composition criteria that are available for the sensor unit 110-k may comprise a third group composition criterion that defines assigning a sensor unit that is not assigned to any of the sensor unit groups to a sensor unit group of another sensor unit that is closest to the respective sensor unit and, consequently, the at least one group composition criterion defined in the applied sensor unit grouping template may comprise the third group composition criterion. As an example, application of the third group composition criterion may comprise the following:
- detect that a given other sensor unit of the first subset is not assigned to the sensor unit group determined for the sensor unit 110-k or to any of the respective sensor unit groups determined for the one or more other sensor units, and
- assign the given other sensor unit to the sensor unit group determined for the sensor unit 110-k in response to the local distance measure (e.g. the local RSSI measure) derived for the given other sensor unit indicating a distance that is smaller than that indicated by any of the remote distance measures (e.g. the remote RSSI measures) derived for the given other sensor unit.

In an example, in case the local and remote distance measures indicate the same or substantially the same distance to the given other sensor unit from the sensor unit 110-k and from one or more further sensor units, the third group composition criterion described may further define a tie-breaking rule to account for such a scenario. As an example, the tie-breaking rule may define assigning the given other sensor unit to the sensor unit group of the sensor unit 110-k in response to the local distance stability measure (e.g. the local RSSI stability measure) derived for the given other sensor unit indicating a distance measure stability that is higher than that indicated by any of the remote distance stability measures (e.g. the remote RSSI stability measures) derived for the one or more further sensor units.

In an example, in case the tie-breaking rule is unsuccessful in assigning the given other sensor unit to the respective sensor unit group of the sensor unit 110-k or one of the one or more further sensor units considered by the tie-breaking rule, a further tie-breaking rule may be applied. As an example, application of the further tie-breaking rule may involve deriving a local secondary distance stability measure (e.g. a local secondary RSSI stability measure) for the given local sensor unit at the sensor unit 110-k and deriving respective remote secondary distance stability measures (e.g. respective remote secondary RSSI stability measures) for the given other sensor unit at the sensor unit 110-k at the one or more further other sensor units and assigning the given other sensor unit to the sensor unit group of the sensor unit 110-k in response to the local further distance stability measure derived for the given other sensor unit indicating a distance measure stability that is higher than that indicated by any of the remote further distance stability measures derived for the one or more further sensor units. In this regard, the respective local secondary distance stability measure (e.g. the local secondary RSSI stability measure) for the given other sensor unit may be derived at the sensor unit 110-k, for example, based on a difference between a predefined percentile (e.g. a 99^{th} percentile) of the distance values (e.g. the RSSI values) defined for the given another sensor at the sensor unit 110-k and an average of the distance values derived for the given another sensor at the sensor unit 110-k, whereas the respective remote secondary distance stability measures (e.g. the respective remote secondary RSSI stability measures) may be derived at respective ones of the one or more further sensor units in a similar manner, *mutatis mutandis.* Modification of the initially determined sensor unit group for the sensor unit 110-k (cf. block 212) may be followed by transmitting, e.g. broadcasting, information that defines the modified sensor unit group in order to make the other elements of the lighting system 100 aware of the sensor unit group determined for the sensor unit 110-k. As an example in this regard, the transmitted information may comprise the respective sensor IDs of those other sensor units that are assigned to the sensor unit group of the sensor unit 110-k. This information may be conveyed from the sensor unit 110-k in one or more sensor unit group information messages transmitted via the communication portion 113-k, wherein the transmitted sensor unit group information messages may further include the sensor ID of the sensor unit 110-k to identify the sensor unit 110-k as the origin of the conveyed information. The other sensor units of the lighting system 100 may likewise determine their respective (modified) sensor unit groups therein and transmit, e.g. broadcast, this information in one or more sensor unit group information messages of the type described above for reception by the other elements of the lighting system 100.

According to an example, any sensor unit grouping template may further define one or more group control parameters for application in controlling the respective light outputs of the associated luminaires 120-j, 170-k based on status indications received at the sensor unit 110-k from the other sensor units that are assigned to the sensor unit group determined for the sensor unit 110-k. As an example in this regard, this aspect of the lighting control of the associated luminaires 120-j, 170-k may be provided via application of the one or more further lighting control rules that may include the fifth lighting control rule and/or the sixth lighting control rule described in the foregoing. As described in foregoing, the aspect of the sensor control portion 114-k controlling the respective light outputs of the associated luminaires 120-j, 170-k (cf. block 214) may comprise application of the first and second lighting control rules for lighting control based on the sensor data obtained from the sensor portion 111-k in the sensor unit 110-k and application of the fifth and sixth lighting control rules for lighting control based status indications received from the other sensor units included in the sensor unit group determined for the sensor unit 110-k.

In an example, the one or more group control parameters may include a first group control parameter that defines the secondary target light intensity for application with the fifth lighting control rule described in the foregoing, wherein the secondary target light intensity is preferably different from the predefined target light intensity. As an example in this regard, the first group control parameter may directly define secondary target light intensity e.g. as a percentage of the nominal (or maximum) light intensity of the associated luminaires 120-j, 170-k, whereas in another example the first group control parameter may define the secondary target light intensity in relation to the predefined target light intensity of the associated luminaires 120-j, 170-k, e.g. as a percentage of the predefined target light intensity. The first group control parameter may set the secondary target light intensity to a value that is lower the predefined target light intensity, thereby providing lighting control where occupancy detected by the occupancy sensor of sensor portion 111-k results in light intensity higher than that resulting from detecting occupancy based on status messages received from another sensor unit of the sensor units group of the sensor unit 110-k. In non-limiting examples, the first group control parameter may be applied to set the secondary target light intensity to a value that is in a range from 50 % to 90 %, e.g. 80 %, of the predefined target light intensity.

In another example, the one or more group control parameters may include a second group control parameter that defines the secondary dimming curve for application with the sixth lighting control rule described in the foregoing, where the secondary dimming curve is preferably different from the predefined dimming curve. As an example in this regard, the second group control parameter may directly define secondary dimming curve as respective one or more secondary intermediate light intensities and/or a secondary dimming period for adjusting the light intensity from the (predefined or secondary) target light intensity to the stand-by light intensity. In another example, the second croup control parameter may define the secondary dimming curve in relation to the predefined dimming curve, e.g. via defining the one or more secondary intermediate light intensities as a percentage of the respective predefined one or more intermediate light intensities and/or via defining the secondary dimming period as a percentage of the predefined dimming period. The second group control parameter preferably defines the secondary dimming curve such that the light intensity is dimmed faster than via application of the predefined dimming curve, thereby providing lighting control where non-occupancy detected by the occupancy sensor of sensor portion 111-k results in slower dimming of the light output in comparison to dimming of the light output in response to detecting non-occupancy based on status messages received from other sensor units of the sensor units group of the sensor unit 110-k. In non-limiting examples, the second group control parameter may be applied to set the one or more secondary intermediate light intensities to respective values that are in a range from 50 % to 90 %, e.g. 80 %, of the respective intermediate light intensities defined for the predefined dimming curve and/or to set the secondary dimming period to a value that is in a range from 20 % to 80 %, e.g. 50 %, of the dimming period defined for the predefined dimming curve.

Referring now to operations that pertain to block 214, as described in the foregoing, the aspect of the sensor control portion 114-k of a stand-alone sensor unit 110-k controlling the respective light outputs of the associated luminaires 120-j assigned to the luminaire group defined therefor may involve the sensor control portion 114-k transmitting the lighting control information (e.g. the sensor indications derived thereat) or the lighting control commands to the associated luminaires 120-j in order to carry out lighting control actions defined in the lighting control logic implemented by the respective control portions 124-j of the associated luminaires 120-j or by the sensor control portion 114-k of the sensor unit 110-k as described in the foregoing. Along similar lines, as also described in the foregoing, the aspect of the sensor control portion 114-k of an integrated sensor unit 110-k controlling the light output of the associated luminaire 170-k may involve the sensor control portion 114-k providing the lighting control information (e.g. the sensor indications derived thereat) or the lighting control commands to the luminaire control portion 124-k.

Along the lines described in the foregoing, in case the sensor unit 110-k is one integrated to the luminaire 170-k, the aspect of may involve the sensor control portion 114-k providing the lighting control information (e.g. the sensor indications derived thereat) or the lighting control commands to the luminaire control portion 124-k that is also implemented in the luminaire 170-k. In case the sensor unit 110-k is a stand-alone one, in an example, the lighting control information or the lighting control commands may be conveyed to the associated luminaires 120-j in one or more lighting control messages transmitted from the sensor unit 110-k via the communication portion 113-k. In an example, the lighting control messages transmitted from the sensor unit 110-k may include the luminaire IDs of the associated luminaires 120-j to address the respective lighting control information or command(s) to the luminaires assigned to the luminaire group determined for the sensor unit 110-k and the lighting control messages may further include the sensor ID of the sensor unit 110-k to identify the sensor unit 110-k as the origin of the lighting control information or command(s). In another example, the lighting control messages transmitted from the sensor unit 110-m may not include the luminaire IDs of the associated luminaires 120-j while they may include the sensor ID of the sensor unit 110-k: since the luminaires 120-j have the knowledge of the sensor ID of the sensor unit 110-k assigned for controlling their light output via the luminaire group information messages received earlier from the sensor unit 110-k, the associated luminaires 120-j may be responsive to the lighting control information or command(s) included in the lighting control messages originating from the sensor unit 110-k without explicit identification of the associated luminaires 120-j in these messages.

Along the lines described in the foregoing, the sensor unit group determination procedure may be carried out, for example, upon installing, configuring or reconfiguring the lighting system 100 and/or the sensor unit 110-k. Moreover, the sensor unit grouping determination procedure may be repeated according to a predefined schedule (e.g. at predefined time intervals) and/or upon request or command addressed to the plurality of the sensor units 110 to account for any changes in the composition of lighting system 100 (e.g. removal of luminaires or sensor units therefrom and/or introduction of additional luminaires or sensor units thereto) or for any refurbishing or restructuring of the space(s) the lighting system 100 serves to illuminate. In a further example, the sensor unit grouping template may define one or more rules for repeating the sensor unit group determination procedure. Non-limiting examples in this regard include the following:
- The sensor unit grouping template may define a schedule for repeating the sensor unit grouping procedure, where the schedule may involve repeating the sensor unit grouping procedure at a time intervals defined in the sensor unit grouping template or at specific time instants defined in the sensor unit grouping template.
- The sensor unit grouping template may define that the sensor unit grouping procedure is to be repeated in response to detecting presence of at least a (first) predefined number of luminaires 120-j, 170-k that were not detected upon carrying out the most recent previous sensor unit grouping procedure and/or in response to detecting absence of a (second) predefined number of luminaires 120-j, 170-k that were detected upon carrying out the most recent previous sensor unit grouping procedure.

As discussed above, the examples concerning various aspects of sensor unit grouping via operation of the method 200 are described in the foregoing with references to using a RSSI based distance estimation, whereas in other examples distance estimation of other kind may be applied. As a non-limiting example in this regard, the local distance measure derived in the sensor control portion 114-k of the sensor unit 110-k for a certain other sensor unit may comprise a hop count measure computed based on respective hop counts derived for one or more ID messages received from the respective other sensor unit at the communication portion 113-k of the sensor unit 110-k. In this regard, the hop count for a given ID message may be included in a header part of the ID message received at the communication portion 113-k, whereas the hop count measure for the respective other sensor unit may be computed as a statistical measure of the respective hop counts observed for the one or more ID messages under consideration, e.g. as a minimum, as an average or as a median thereof. Hence, a low hop count measure indicates a short(er) distance between the sensor unit 110-k and the respective other sensor unit while a high hop count measure indicates a long(er) distance between the sensor unit 110-k and the respective sensor unit, and, consequently, the hop count measure may serve as indication of the distance between the respective other sensor unit and the sensor unit 110-k e.g. in scenarios where the ID messages are relayed from the other sensor units to the sensor unit 110-k via one or more intermediate nodes (e.g. in a mesh network).

Hence, in the hop count based distance estimation the distance values may comprise respective hop counts obtained from the ID messages received at the communication portion 113-k, the distance measure may comprise the hop count measure, and the distance stability measure may comprise a hop count stability measure, whereas the application of the one or more distance criteria and any computation involved therein may be carried out based on the hop count values, hop count measures and/or hop count stability measures (instead of or in addition to e.g. the RSSI values, RSSI measures and/or RSSI stability measures), *mutatis mutandis.*

As another example of distance measures other than RSSI, the local distance measure derived in the sensor control portion 114-k of the sensor unit 110-k for a certain other sensor unit may comprise a time of flight (ToF) measure computed based on respective ToF values derived for one or more ID messages received from the respective other sensor unit at the communication portion 113-k of the sensor unit 110-k. In this regard, the ToF value for a given ID message may be computed based on a difference between the reception time and the transmission time of the respective ID message. In this regard, the ID message (e.g. a header part thereof) may include a timestamp indicating the transmission time of the respective ID message and, assuming time synchronization between the respective other sensor unit and the sensor unit 110-k, the ToF value for a given ID message may be computed as the difference between the reception and transmission times derived for the respective ID message. The ToF measure may be computed as a statistical measure of the respective ToF values computed for the one or more ID messages under consideration, e.g. as a minimum, as an average, as a median, or as a maximum thereof. Hence, a low ToF measure indicates a short(er) distance between the sensor unit 110-k and the respective other sensor unit while a high ToF measure indicates a long(er) distance between the sensor unit 110-k and the respective other sensor unit, and, consequently, the ToF measure may serve as indication of the distance between the respective other sensor unit and the sensor unit 110-k e.g. in scenarios where the sensor unit 110-k receives the ID messages directly from the respective other sensor unit (i.e. without the ID messages being relayed by intermediate nodes of the lighting network).

Hence, in the ToF-based distance estimation the distance values may comprise respective ToF values derived based on the ID messages received at the communication portion 113-k, the distance measure may comprise the ToF measure, and the distance stability measure may comprise a ToF stability measure, whereas the application of the one or more distance criteria and any computation involved therein may be carried out based on the ToF values, ToF measures and/or ToF stability measures (instead of or in addition to e.g. the RSSI values, RSSI measures and/or RSSI stability measures), *mutatis mutandis.*

Although described above with using the RSSI-based distance estimation as an example, the first, second and/or second distance criteria described in the foregoing may, additionally or alternatively, rely on distance values, distance measures and/or distance stability measures (as applicable) that are derived via usage of the hop-count-based distance estimation and/or the ToF-based distance estimation. In this regard, the one or more predefined distance criteria available for the sensor unit 110-k may comprise two or more instances of the respective one of the first, second and/or third distance criteria that apply different basis for distance estimation and, consequently, the at least one distance criterion defined in the applied sensor unit grouping template may define usage of one or more of such instances of the respective one of the first, second and/or third distance criteria. Considering the first distance criterion as an example, a first instance of the first distance criterion may apply a RSSI-based distance estimation, whereas a second instance of the first distance criterion may apply a hop-count-based distance criterion.

Referring back to the RSSI-based distance estimation described in the foregoing, in scenarios where the transmission path from a transmitting entity to a receiving entity (e.g. from another sensor unit to the sensor unit 110-k) is unobstructed, the RSSI measure may be directly descriptive of a physical distance between the transmitting and receiving entities due to attenuation of the radio signal as a function of distance. On the other hand, structural elements such as walls and windows within the illuminated space may result in additional attenuation of the radio signal, possibly leading to scenarios where the RSSI measure is not a direct indication of the physical distance between the transmitting and receiving entities. However, since such obstacles typically also serve to prevent light from passing therethrough and/or delimit the space into different portions that are preferably illuminated independently of each other, such additional attenuation of the radio signal and the resulting RSSI measure that suggest a distance longer than the actual physical distance between the transmitting and receiving entities is actually advantageous in terms of the sensor unit 110-k using the RSSI measure in identifying other sensor units that are applicable for inclusion in the sensor unit group being determined therefor. Non-limiting examples of radio signal attenuating effect resulting from certain structural elements are provided in the following:
- An exterior wall or an exterior window of a building typically results in a relatively large attenuation of the radio signal;
- A load-bearing (interior) wall of a building typically results in a relatively large attenuation of the radio signal, corresponding to the attenuation caused by an exterior wall;
- A relatively thin (non-load-bearing) interior wall that delimits an interior space into two portions results in a moderate attenuation of the radio signal;
- A glass wall that delimits an interior space into two portions results in a relatively small attenuation of the radio signal;
- A door between two portions of a space results in a time-varying attenuation of the radio signal.

As also described in the following, there may be a plurality of different sensor unit grouping templates that are configured suitable for respective different types of spaces, whereas one of the plurality of sensor unit grouping templates may be selected as the sensor unit grouping template applied for the sensor unit 110-k. This aspect is further illustrated via a non-limiting example of Figure 6 that shows a floorplan of an illuminated space including spaces of different types:
- Open areas (e.g. small or large open office spaces), for which a relatively large sensor unit group with a relatively relaxed distance requirement (to allow for covering a relatively large physical area) may be preferred;
- Large rooms (e.g. large office rooms or meeting rooms), for which a medium sized sensor unit group with a relatively stringent requirement to distance and distance variation (to ensure covering somewhat limited physical area) may be preferred;
- Small rooms (e.g. small office rooms), for which a relatively small sensor unit group with a relatively stringent requirement to distance and distance variation (to ensure covering a relatively small physical area) may be preferred
- A corridor, for which a relatively large sensor unit group with a relatively stringent distance requirement (to allow for covering a physical area without obstructing structures between the sensor units) may be preferred.

The sensor unit group determination procedure described in the foregoing via a number of examples provides automated determination of the respective sensor unit groups at sensor units 110-k of lighting system 100. Configuring operation of the lighting system in such a manner via carrying out the sensor unit group determination via operating the elements of the lighting system 100 in its actual operating environment ensures basing the sensor unit group determination on measurement data obtained in actual operating conditions of the lighting system 100. Hence, the disclosed approach does not only enable avoiding tedious manual configuration of the plurality of sensor units 110 to apply respective manually designed sensor unit groups but also facilitates determination of sensor unit groups in a manner that enables energy-efficient operation while still ensuring user comfort due to sufficient lighting in locations of the illuminated space where occupant are detected.

While the sensor unit group determination procedure is described in the foregoing as a standalone procedure, the automated sensor unit grouping via operation of the method 200 may be, alternatively, complemented by manual determination of respective sensor unit groups for one or more of the plurality of sensor units 110 and manual configuration of the respective sensor units 110-k accordingly.

As an example in this regard, a given sensor unit 110-k may be configured with a predetermined sensor unit group with predefined one or more other sensor units of the lighting system 100 assigned thereto prior to carrying out the sensor unit grouping procedure in the (other) sensor units of the lighting system 100. In an example, such manually determined sensor unit group may be provided e.g. by providing the sensor unit 110-k arranged to apply the predetermined sensor unit group with a higher sensor unit priority than any of the other sensor units that determine their respective sensor unit groups according to the method 200, thereby ensuring that to the automated sensor unit grouping procedure does not impose any changes to the predetermined sensor unit group

As another example of applying manual determination of respective sensor unit groups for one or more sensor units 110-k of the lighting system 100 in addition to the sensor unit grouping procedure described in the foregoing involves manual adjustment of respective sensor unit groups determined for one or more of the plurality of sensor units 110 via operation of the automated grouping procedure, which may be applicable e.g. in a scenario where one of two or more sensor units that are located relatively close to each other but in portions of the illuminated space that are separated by a (non-transparent) wall is included in the sensor unit group of the other one.

Figure 7 illustrates a block diagram of some components of an apparatus 300 that may be employed to implement at least some of the operations described with references to the sensor control apparatus 112-k or with references to the luminaire control apparatus 122-j. The apparatus 300 comprises a processor 310 and a memory 320. The memory 320 may store data and computer program code 325. The apparatus 300 may further comprise communication means 330 for wired or wireless communication with other apparatuses, where the communication means 330 may comprise respective one of the communication portion 113-k or the communication portion 123-j. The apparatus 300 may further comprise user I/O (input/output) components 340 that may be arranged, together with the processor 310 and a portion of the computer program code 325, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the respective one of the sensor control apparatus 112-k or the luminaire control apparatus 122-j. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the respective one of the sensor control apparatus 112-k or the luminaire control apparatus 122-j when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the lighting system controller 110. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the respective one of the sensor control apparatus 112-k or the luminaire control apparatus 122-j.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the respective one of the sensor control apparatus 112-k or the luminaire control apparatus 122-j. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A sensor unit (110-k) for controlling respective light outputs of one or more luminaires (120-j, 170-k) arranged for illuminating respective locations of a space, the sensor unit (110-k) comprising:
a sensor portion (111-k) comprising one or more sensors for observing respective environmental characteristics at a location of the space;
a communication portion (113-k) for wireless communication with other devices; and
a sensor control portion (114-k) arranged to:
obtain one or more grouping criteria for determining a sensor unit group for the sensor unit (110-k), wherein said one or more grouping criteria comprise at least one distance criterion;
derive a respective local distance measure for one or more other sensor units based on one or more messages received therefrom at the communication portion (113-k), wherein each local distance measure is descriptive of a distance between the sensor unit (110-k) and the respective other sensor unit;
determine the sensor unit group for the sensor unit (110-k) via assigning thereto, in accordance with the at least one distance criterion, at least one of said one or more other sensor units based on the local distance measure derived therefor; and
control the respective light outputs of said one or more luminaires (120-j, 170-k) based on sensor data received from the sensor portion (111-k) and further based on status indications received via the communication portion (113-k) from the at least one other sensor unit assigned to said sensor unit group;
**characterized in that** the sensor control portion (114-k) is arranged to obtain a sensor unit grouping template that defines said one or more grouping criteria via indicating selection of the one or more grouping criteria from a plurality of predefined grouping criteria available for the sensor unit (110-k).

2. A sensor unit (110-k) according to claim 1, wherein the at least one distance criterion comprise at least one of the following:
a first distance criterion that defines a predefined distance measure threshold that indicates a maximum allowable distance between the sensor unit (110-k) and the respective other sensor unit,
a second distance criterion that defines a predefined distance difference measure threshold that indicates a maximum allowable value for a distance difference measure, wherein the distance difference measure for a given other sensor unit is derived as a difference between the highest local distance measure derived for any of the one or more other sensor units and the local distance measure derived for the respective other sensor unit,
a third distance criterion that defines a predefined distance stability threshold that indicates a minimum allowable value for a distance stability measure, wherein the distance stability measure for a given other sensor unit is computed based on respective distance values derived based on the one or more messages received from the respective other sensor unit based on a difference between a minimum distance value derived for the respective other sensor unit and an average of the distance values derived for the respective other sensor unit.

3. A sensor unit (110-k) according to claim 2, wherein at least one of the following applies:
at least one of the first, second and third distance criteria apply a respective fixed predefined threshold value,
at least one of the first, second and third distance criteria apply a respective threshold value defined via a respective user-definable parameter of the sensor unit grouping template.

4. A sensor unit (110-k) according to any of claims 1 to 3, wherein a distance measure that is descriptive of a distance between the sensor unit (110-k) and a given other sensor unit comprises one of the following:
a received signal strength indictor, RSSI, measure computed based on respective RSSI values derived for one or more messages received at the sensor unit (110-k) from the respective other sensor unit,
a hop count measure computed based on respective hop counts observed for one or more messages received at the sensor unit (110-k) from the respective other sensor unit,
a time of flight, ToF, measure computed based on respective ToF values derived for one or more messages received at the sensor unit (110-k) from the respective other sensor unit.

5. A sensor unit (110-k) according to any of claims 1 to 4, wherein the one or more grouping criteria defined in the sensor unit grouping template further comprise at least one group size criterion and wherein assigning at least one of the one or more other sensor units to said sensor unit group is carried out further in accordance with the at least one group size criterion.

6. A sensor unit (110-k) according to claim 5, wherein the at least one group size criterion comprise at least one of the following:
a first group size criterion that defines a minimum allowable number of luminaires for said sensor unit group,
a second group size criterion that defines a maximum allowable number of luminaires for said sensor unit group.

7. A sensor unit (110-k) according to any of claims 1 to 6, wherein
each of the one or more grouping criteria defined in the sensor unit grouping template have a respective criterion priority assigned thereto, and
assigning at least one of the one or more other sensor units to the sensor unit group determined for the sensor unit (110-k) comprises, in a scenario where two grouping criteria cannot be simultaneously met, complying with the grouping criterion assigned a higher criterion priority while ignoring the grouping criterion assigned a lower criterion priority.

8. A sensor unit (110-k) according to any of claims 1 to 7, wherein
the one or more grouping criteria defined in the sensor unit grouping template further comprise at least a first group composition criterion that defines one or more template types that are allowable for inclusion in said sensor unit group, and
determination of said sensor unit group only considers those ones of the one or more other sensor units for which a template type matching one of said one or more template types is indicated,
wherein each template type indicates a type of space for which the respective sensor unit grouping template is intended for.

9. A sensor unit (110-k) according to any of claims 1 to 8, wherein the sensor control portion (114-k) is arranged to select the sensor unit grouping template from a plurality of different predefined sensor unit grouping templates that define respective different sets of one or more grouping criteria that are considered suitable for spaces of different types and/or purposes.

10. A sensor unit (110-k) according to any of claims 1 to 9, wherein the sensor unit grouping template further defines one or more group control parameters and wherein the sensor control portion (114-k) is arranged to:
control the respective light outputs of said one or more luminaires (120-j, 170-k) based on the sensor data received from the sensor portion (111-k) in accordance with one or more predefined lighting control parameters defined for the sensor unit (110-k); and
control the respective light outputs of said one or more luminaires (120-j, 170-k) based on the status indications received from the at least one other sensor unit assigned to said sensor unit group in accordance with the one or more group control parameters.

11. A sensor unit (110-k) according to claim 10, wherein said one or more predefined lighting control parameters define a predefined target light intensity for the one or more luminaires (120-j, 170-k) and said one or more group control parameters define a secondary target light intensity for the one or more luminaires (120-j, 170-k) that is different from said predefined target light intensity.

12. A sensor unit (110-k) according to claim 10 or 11, wherein said one or more predefined lighting control parameters define a predefined dimming curve for switching off the respective light output for the one or more luminaires (120-j, 170-k) and said one or more group control parameters define a secondary dimming curve for switching off the respective light output for the one or more luminaires (120-j, 170-k) that is different from said predefined dimming curve.

13. A sensor unit (110-k) according to any of claims 1 to 12, wherein the one or more grouping criteria comprise at least one group composition criterion and wherein the sensor control portion (114-k) is further arranged to:
receive, from the one or other sensor units, respective remote distance measures derived at the respective other sensor unit for one or more further sensor units, wherein each remote distance measure is descriptive of a distance between the respective other sensor unit and the respective further sensor unit;
receive, from the one or more other sensor units, information that defines a respective sensor unit group determined for the respective other sensor unit; and
modify the sensor unit group determined for the sensor unit (110-k) in accordance with the at least one group composition criterion in consideration of the respective sensor unit groups determined for the one or more other sensor units and in consideration of the local and remote distance measures.

14. A luminaire (170-k) comprising a sensor unit (110-k) according to any of claims 1 to 13.

15. A method (200) in a sensor unit (110-k) for controlling respective light outputs of one or more luminaires (120-j, 170-k) for illuminating respective locations of a space, the method (200) comprising:
obtaining (202) one or more grouping criteria for determining a sensor unit group for the sensor unit (110-k), wherein said one or more grouping criteria comprise at least one distance criterion;
deriving (204) a respective local distance measure for one or more other sensor units based on one or more messages received therefrom at a communication portion (113-k) of the sensor unit (110-k), wherein each local distance measure is descriptive of a distance between the sensor unit (110-k) and the respective other sensor unit;
determining (208) the sensor unit group for the sensor unit (110-k) via assigning thereto, in accordance with the at least one distance criterion, at least one of the one or more other sensor units based on the local distance measure derived therefor; and
controlling (214) the respective light outputs of the one or more luminaires (120-j, 170-k) based on the sensor data received from the sensor portion (111-k) and further based on status indications received via the communication portion (113-k) from the at least one other sensor unit assigned to said sensor unit group for the sensor unit (110-k),
**characterized in that** the obtaining one or more grouping criteria comprises obtaining a sensor unit grouping template that defines said one or more grouping criteria via indicating selection of the one or more grouping criteria from a plurality of predefined grouping criteria available for the sensor unit (110-k).

## Patentansprüche

1. Sensoreinheit (110-k) zum Steuern jeweiliger Lichtausgaben einer oder mehrerer Leuchten (120-j, 170-k), die zum Beleuchten jeweiliger Orte eines Raums angeordnet sind, wobei die Sensoreinheit (110-k) Folgendes umfasst:
einen Sensorteil (111-k), der einen oder mehrere Sensoren zum Beobachten jeweiliger Umgebungscharakteristiken an einem Ort des Raums umfasst;
einen Kommunikationsteil (113-k) zur drahtlosen Kommunikation mit anderen Vorrichtungen; und
einen Sensorsteuerteil (114-k), der zu Folgendem eingerichtet ist:
Erhalten eines oder mehrerer Gruppierungskriterien zum Bestimmen einer Sensoreinheitsgruppe für die Sensoreinheit (110-k), wobei das eine oder die mehreren Gruppierungskriterien wenigstens ein Entfernungskriterium umfassen;
Ableiten eines jeweiligen lokalen Entfernungsmaßes für eine oder mehrere andere Sensoreinheiten basierend auf einer oder mehreren Nachrichten, die davon an dem Kommunikationsteil (113-k) empfangen werden, wobei jedes lokale Entfernungsmaß eine Entfernung zwischen der Sensoreinheit (110-k) und der jeweiligen anderen Sensoreinheit beschreibt;
Bestimmen der Sensoreinheitsgruppe für die Sensoreinheit (110-k) über Zuweisen wenigstens einer der einen oder mehreren anderen Sensoreinheiten basierend auf dem dafür abgeleiteten lokalen Entfernungsmaß gemäß dem wenigstens einen Entfernungskriterium dazu; und
Steuern der jeweiligen Lichtausgaben der einen oder der mehreren Leuchten (120-j, 170-k) basierend auf Sensordaten, die von dem Sensorteil (111-k) empfangen werden, und ferner basierend auf Statusindikationen, die über den Kommunikationsteil (113-k) von der wenigstens einen anderen Sensoreinheit empfangen werden, die der Sensoreinheitsgruppe zugewiesen ist;
**dadurch gekennzeichnet, dass** der Sensorsteuerteil (114-k) dazu eingerichtet ist, eine Sensoreinheitsgruppierungsvorlage zu erhalten, die das eine oder die mehreren Gruppierungskriterien definiert, indem eine Auswahl des einen oder der mehreren Gruppierungskriterien aus mehreren vordefinierten Gruppierungskriterien angegeben wird, die für die Sensoreinheit (110-k) verfügbar sind.

2. Sensoreinheit (110-k) nach Anspruch 1, wobei das wenigstens eine Entfernungskriterium wenigstens eines von Folgendem umfasst:
ein erstes Entfernungskriterium, das eine vordefinierte Entfernungsmaßschwelle definiert, die eine maximale zulässige Entfernung zwischen der Sensoreinheit (110-k) und der jeweiligen anderen Sensoreinheit angibt,
ein zweites Entfernungskriterium, das eine vordefinierte Entfernungsdifferenzmaßschwelle definiert, die einen maximalen zulässigen Wert für ein Entfernungsdifferenzmaß angibt, wobei das Entfernungsdifferenzmaß für eine gegebene andere Sensoreinheit als eine Differenz zwischen dem höchsten lokalen Entfernungsmaß, das für eine beliebige der einen oder mehreren anderen Sensoreinheiten abgeleitet wird, und dem lokalen Entfernungsmaß, das für die jeweilige andere Sensoreinheit abgeleitet ist, abgeleitet wird,
ein drittes Entfernungskriterium, das eine vordefinierte Entfernungsstabilitätsschwelle definiert, die einen minimalen zulässigen Wert für ein Entfernungsstabilitätsmaß angibt, wobei das Entfernungsstabilitätsmaß für eine gegebene andere Sensoreinheit basierend auf jeweiligen Entfernungswerten berechnet wird, die basierend auf der einen oder den mehreren Nachrichten abgeleitet werden, die von der jeweiligen anderen Sensoreinheit basierend auf einer Differenz zwischen einem minimalen Entfernungswert, der für die jeweilige andere Sensoreinheit abgeleitet wird, und einem Durchschnitt der Entfernungswerte, die für die jeweilige andere Sensoreinheit abgeleitet werden, empfangen werden.

3. Sensoreinheit (110-k) nach Anspruch 2, wobei wenigstens eines von Folgendem zutrifft:
das erste, zweite und/oder dritte Entfernungskriterium wenden einen jeweiligen festen vordefinierten Schwellenwert an,
das erste, zweite und/oder dritte Entfernungskriterium wendet einen jeweiligen Schwellenwert an, der über einen jeweiligen benutzerdefinierbaren Parameter der Sensoreinheitsgruppierungsvorlage definiert ist.

4. Sensoreinheit (110-k) nach einem der Ansprüche 1 bis 3, wobei ein Entfernungsmaß, das eine Entfernung zwischen der Sensoreinheit (110-k) und einer gegebenen anderen Sensoreinheit beschreibt, eines von Folgendem umfasst:
ein Empfangssignalstärkeindikator- bzw. RSSI-Maß, das basierend auf jeweiligen RSSI-Werten berechnet wird, die für eine oder mehrere Nachrichten abgeleitet werden, die an der Sensoreinheit (110-k) von der jeweiligen anderen Sensoreinheit empfangen werden,
ein Hop-Zahl-Maß, das basierend auf jeweiligen Hop-Zahlen berechnet wird, die für eine oder mehrere Nachrichten beobachtet werden, die an der Sensoreinheit (110-k) von der jeweiligen anderen Sensoreinheit empfangen werden,
ein Laufzeit- bzw. ToF-Maß, das basierend auf jeweiligen ToF-Werten berechnet wird, die für eine oder mehrere Nachrichten abgeleitet werden, die an der Sensoreinheit (110-k) von der jeweiligen anderen Sensoreinheit empfangen werden.

5. Sensoreinheit (110-k) nach einem der Ansprüche 1 bis 4, wobei das eine oder die mehreren Gruppierungskriterien, die in der Sensoreinheitsgruppierungsvorlage definiert sind, ferner wenigstens ein Gruppengrößenkriterium umfassen und wobei das Zuweisen wenigstens einer der einen oder der mehreren anderen Sensoreinheiten zu der Sensoreinheitsgruppe ferner gemäß dem wenigstens einen Gruppengrößenkriterium ausgeführt wird.

6. Sensoreinheit (110-k) nach Anspruch 5, wobei das wenigstens eine Gruppengrößenkriterium wenigstens eines von Folgendem umfasst:
ein erstes Gruppengrößenkriterium, das eine minimale zulässige Anzahl von Leuchten für die Sensoreinheitsgruppe definiert,
ein zweites Gruppengrößenkriterium, das eine maximale zulässige Anzahl von Leuchten für die Sensoreinheitsgruppe definiert.

7. Sensoreinheit (110-k) nach einem der Ansprüche 1 bis 6, wobei
jedem des einen oder der mehreren Gruppierungskriterien, die in der Sensoreinheitsgruppierungsvorlage definiert sind, eine jeweilige Kriteriumspriorität zugewiesen wird, und
Zuweisen wenigstens einer der einen oder mehreren anderen Sensoreinheiten zu der für die Sensoreinheit (110-k) bestimmten Sensoreinheitsgruppe in einem Szenario, in dem zwei Gruppierungskriterien nicht gleichzeitig erfüllt werden können, Befolgen des Gruppierungskriteriums umfasst, dem eine höhere Kriteriumspriorität zugewiesen ist, während das Gruppierungskriterium, dem eine niedrigere Kriteriumspriorität zugewiesen ist, ignoriert wird.

8. Sensoreinheit (110-k) nach einem der Ansprüche 1 bis 7, wobei
das eine oder die mehreren Gruppierungskriterien, die in der Sensoreinheitsgruppierungsvorlage definiert sind, ferner wenigstens ein erstes Gruppenzusammensetzungskriterium umfassen, das einen oder mehrere Vorlagentypen definiert, die zur Aufnahme in die Sensoreinheitsgruppe zulässig sind, und
die Bestimmung der Sensoreinheitsgruppe nur diejenigen der einen oder der mehreren anderen Sensoreinheiten berücksichtigt, für die ein Vorlagentyp angegeben ist, der mit einem des einen oder der mehreren Vorlagentypen übereinstimmt,
wobei jeder Vorlagentyp einen Typ von Raum angibt, für den die jeweilige Sensoreinheitsgruppierungsvorlage beabsichtigt ist.

9. Sensoreinheit (110-k) nach einem der Ansprüche 1 bis 8, wobei der Sensorsteuerteil (114-k) dazu eingerichtet ist, die Sensoreinheitsgruppierungsvorlage aus mehreren verschiedenen vordefinierten Sensoreinheitsgruppierungsvorlagen auszuwählen, die jeweilige unterschiedliche Sätze eines oder mehrerer Gruppierungskriterien definieren, die als geeignet für Räume unterschiedlicher Typen und/oder Zwecke angesehen werden.

10. Sensoreinheit (110-k) nach einem der Ansprüche 1 bis 9, wobei die Sensoreinheitsgruppierungsvorlage ferner einen oder mehrere Gruppensteuerparameter definiert und wobei der Sensorsteuerteil (114-k) zu Folgendem eingerichtet ist:
Steuern der jeweiligen Lichtausgaben der einen oder mehreren Leuchten (120-j, 170-k) basierend auf den Sensordaten, die von dem Sensorteil (111-k) empfangen werden, gemäß einem oder mehreren vordefinierten Beleuchtungssteuerparametern, die für die Sensoreinheit (110-k) definiert sind; und
Steuern der jeweiligen Lichtausgaben der einen oder mehreren Leuchten (120-j, 170-k) basierend auf den Statusindikationen, die von der wenigstens einen anderen Sensoreinheit empfangen werden, die der Sensoreinheitsgruppe zugewiesen ist, gemäß dem einen oder den mehreren Gruppensteuerparametern.

11. Sensoreinheit (110-k) nach Anspruch 10, wobei der eine oder die mehreren vordefinierten Beleuchtungssteuerparameter eine vordefinierte Ziellichtintensität für die eine oder die mehreren Leuchten (120-j, 170-k) definieren und der eine oder die mehreren Gruppensteuerparameter eine sekundäre Ziellichtintensität für die eine oder die mehreren Leuchten (120-j, 170-k) definieren, die sich von der vordefinierten Ziellichtintensität unterscheidet.

12. Sensoreinheit (110-k) nach Anspruch 10 oder 11, wobei der eine oder die mehreren vordefinierten Beleuchtungssteuerparameter eine vordefinierte Dimmkurve zum Ausschalten der jeweiligen Lichtausgabe für die eine oder die mehreren Leuchten (120-j, 170-k) definieren und der eine oder die mehreren Gruppensteuerparameter eine sekundäre Dimmkurve zum Ausschalten der jeweiligen Lichtausgabe für die eine oder die mehreren Leuchten (120-j, 170-k) definieren, die sich von der vordefinierten Dimmkurve unterscheidet.

13. Sensoreinheit (110-k) nach einem der Ansprüche 1 bis 12, wobei das eine oder die mehreren Gruppierungskriterien wenigstens ein Gruppenzusammensetzungskriterium umfassen und wobei der Sensorsteuerteil (114-k) ferner zu Folgendem eingerichtet ist:
Empfangen, von der einen oder den anderen Sensoreinheiten, jeweiliger ferner Entfernungsmaße, die an der jeweiligen anderen Sensoreinheit für eine oder mehrere weitere Sensoreinheiten abgeleitet werden, wobei jedes fernen Entfernungsmaß einen Entfernung zwischen der jeweiligen anderen Sensoreinheit und der jeweiligen weiteren Sensoreinheit beschreibt;
Empfangen, von der einen oder den mehreren anderen Sensoreinheiten, von Informationen, die eine jeweilige Sensoreinheitsgruppe definieren, die für die jeweilige andere Sensoreinheit bestimmt wird; und
Modifizieren der für die Sensoreinheit (110-k) bestimmten Sensoreinheitsgruppe gemäß dem wenigstens einen Gruppenzusammensetzungskriterium unter Berücksichtigung der jeweiligen für die eine oder die mehreren anderen Sensoreinheiten bestimmten Sensoreinheitsgruppen und unter Berücksichtigung der lokalen und fernen Entfernungsmaße.

14. Leuchte (170-k), die eine Sensoreinheit (110-k) nach einem der Ansprüche 1 bis 13 umfasst.

15. Verfahren (200) in einer Sensoreinheit (110-k) zum Steuern jeweiliger Lichtausgaben einer oder mehrerer Leuchten (120-j, 170-k) zum Beleuchten jeweiliger Orte eines Raums, wobei das Verfahren (200) Folgendes umfasst:
Erhalten (202) eines oder mehrerer Gruppierungskriterien zum Bestimmen einer Sensoreinheitsgruppe für die Sensoreinheit (110-k), wobei das eine oder die mehreren Gruppierungskriterien wenigstens ein Entfernungskriterium umfassen;
Ableiten (204) eines jeweiligen lokalen Entfernungsmaßes für eine oder mehrere andere Sensoreinheiten basierend auf einer oder mehreren Nachrichten, die davon an einem Kommunikationsteil (113-k) der Sensoreinheit (110-k) empfangen werden, wobei jedes lokale Entfernungsmaß eine Entfernung zwischen der Sensoreinheit (110-k) und der jeweiligen anderen Sensoreinheit beschreibt;
Bestimmen (208) der Sensoreinheitsgruppe für die Sensoreinheit (110-k) über Zuweisen wenigstens einer der einen oder mehreren anderen Sensoreinheiten basierend auf dem dafür abgeleiteten lokalen Entfernungsmaß gemäß dem wenigstens einen Entfernungskriterium dazu; und
Steuern (214) der jeweiligen Lichtausgaben der einen oder der mehreren Leuchten (120-j, 170-k) basierend auf den Sensordaten, die von dem Sensorteil (111-k) empfangen werden, und ferner basierend auf Statusindikationen, die über den Kommunikationsteil (113-k) von der wenigstens einen anderen Sensoreinheit empfangen werden, die der Sensoreinheitsgruppe für die Sensoreinheit (110-k) zugewiesen ist;
**dadurch gekennzeichnet, dass** der das Erhalten eines oder mehrerer Gruppierungskriterien Erhalten einer Sensoreinheitsgruppierungsvorlage umfasst, die das eine oder die mehreren Gruppierungskriterien definiert, indem eine Auswahl des einen oder der mehreren Gruppierungskriterien aus mehreren vordefinierten Gruppierungskriterien angegeben wird, die für die Sensoreinheit (110-k) verfügbar sind.

## Revendications

1. Unité de capteurs (110-k) pour commander des émissions lumineuses respectives d'un ou de plusieurs luminaires (120-j, 170-k) agencés pour éclairer des endroits respectifs d'un espace, l'unité de capteurs (110-k) comprenant :
une partie capteurs (111-k) comprenant un ou plusieurs capteurs pour observer des caractéristiques environnementales respectives à un endroit de l'espace ;
une partie de communication (113-k) pour une communication sans fil avec d'autres dispositifs ; et
une partie de commande de capteurs (114-k) agencée pour :
obtenir un ou plusieurs critères de groupement pour déterminer un groupe d'unités de capteurs pour l'unité de capteurs (110-k), lesdits un ou plusieurs critères de groupement comprenant au moins un critère de distance ;
dériver une mesure de distance locale respective pour une ou plusieurs autres unités de capteurs sur la base d'un ou de plusieurs messages reçus en provenance de celles-ci au niveau de la partie de communication (113-k), chaque mesure de distance locale décrivant une distance entre l'unité de capteurs (110-k) et l'autre unité de capteurs respective ;
déterminer le groupe d'unités de capteurs pour l'unité de capteurs (110-k) en lui affectant, conformément à l'au moins un critère de distance, au moins l'une desdites une ou plusieurs autres unités de capteurs sur la base de la mesure de distance locale dérivée pour celles-ci ; et
commander les émissions lumineuses respectives desdits un ou plusieurs luminaires (120-j, 170-k) sur la base de données de capteurs reçues en provenance de la partie capteurs (111-k) et sur la base en outre d'indications d'état reçues via la partie de communication (113-k) en provenance de l'au moins une autre unité de capteurs affectée audit groupe d'unités de capteurs ;
**caractérisée en ce que** la partie de commande de capteurs (114-k) est agencée pour obtenir un modèle de groupement d'unités de capteurs qui définit lesdits un ou plusieurs critères de groupement en indiquant une sélection des un ou plusieurs critères de groupement parmi une pluralité de critères de groupement prédéfinis disponibles pour l'unité de capteurs (110-k).

2. Unité de capteurs (110-k) selon la revendication 1, dans laquelle l'au moins un critère de distance comprend au moins l'un des critères suivants :
un premier critère de distance qui définit un seuil de mesure de distance prédéfini qui indique une distance maximale admissible entre l'unité de capteurs (110-k) et l'autre unité de capteurs respective,
un deuxième critère de distance qui définit un seuil de mesure de différence de distance prédéfini qui indique une valeur maximale admissible pour une mesure de différence de distance, la mesure de différence de distance pour une autre unité de capteurs donnée étant dérivée sous forme d'une différence entre la mesure de distance locale la plus élevée dérivée pour l'une quelconque des une ou plusieurs autres unités de capteurs et la mesure de distance locale dérivée pour l'autre unité de capteurs respective,
un troisième critère de distance qui définit un seuil de stabilité de distance prédéfini qui indique une valeur minimale admissible pour une mesure de stabilité de distance, la mesure de stabilité de distance pour une autre unité de capteurs donnée étant calculée sur la base de valeurs de distance respectives dérivées sur la base des un ou plusieurs messages reçus en provenance de l'autre unité de capteurs respective sur la base d'une différence entre une valeur de distance minimale dérivée pour l'autre unité de capteurs respective et une moyenne des valeurs de distance dérivées pour l'autre unité de capteurs respective.

3. Unité de capteurs (110-k) selon la revendication 2, dans laquelle au moins l'une des situations suivantes s'applique :
au moins l'un des premier, deuxième et troisième critères de distance applique une valeur de seuil prédéfinie fixe respective,
au moins l'un des premier, deuxième et troisième critères de distance applique une valeur de seuil respective définie via un paramètre respectif définissable par l'utilisateur du modèle de groupement d'unités de capteurs.

4. Unité de capteurs (110-k) selon l'une quelconque des revendications 1 à 3, dans laquelle une mesure de distance décrivant une distance entre l'unité de capteurs (110-k) et une autre unité de capteurs donnée comprend l'une des mesures suivantes :
une mesure d'indicateur d'intensité de signal reçu, RSSI, calculée sur la base de valeurs de RSSI respectives dérivées pour un ou plusieurs messages reçus au niveau de l'unité de capteurs (110-k) en provenance de l'autre unité de capteurs respective,
une mesure de nombres de sauts calculée sur la base de nombres de sauts respectifs observés pour un ou plusieurs messages reçus au niveau de l'unité de capteurs (110-k) en provenance de l'autre unité de capteurs respective,
une mesure de temps de vol, ToF, calculée sur la base de valeurs de ToF respectives dérivées pour un ou plusieurs messages reçus au niveau de l'unité de capteurs (110-k) en provenance de l'autre unité de capteurs respective.

5. Unité de capteurs (110-k) selon l'une quelconque des revendications 1 à 4, dans laquelle les un ou plusieurs critères de groupement définis dans le modèle de groupement d'unités de capteurs comprennent en outre au moins un critère de taille de groupe et dans laquelle l'affectation d'au moins l'une des une ou plusieurs autres unités de capteurs audit groupe d'unités de capteurs est effectuée en outre conformément à l'au moins un critère de taille de groupe.

6. Unité de capteurs (110-k) selon la revendication 5, dans laquelle l'au moins un critère de taille de groupe comprend au moins l'un des critères suivants :
un premier critère de taille de groupe qui définit un nombre minimum admissible de luminaires pour ledit groupe d'unités de capteurs,
un deuxième critère de taille de groupe qui définit un nombre maximal admissible de luminaires pour ledit groupe d'unités de capteurs.

7. Unité de capteurs (110-k) selon l'une quelconque des revendications 1 à 6, dans laquelle
chacun des un ou plusieurs critères de groupement définis dans le modèle de groupement d'unités de capteurs possède une priorité de critère respective qui lui est affectée, et
l'affectation d'au moins l'une des une ou plusieurs autres unités de capteurs au groupe d'unités de capteurs déterminé pour l'unité de capteurs (110-k) comprend, dans un scénario où deux critères de groupement ne peuvent pas être simultanément satisfaits, le respect du critère de groupement auquel est affectée une priorité de critère la plus élevée tout en ignorant le critère de groupement auquel est affectée une priorité de critère la plus faible.

8. Unité de capteurs (110-k) selon l'une quelconque des revendications 1 à 7, dans laquelle
les un ou plusieurs critères de groupement définis dans le modèle de groupement d'unités de capteurs comprennent en outre au moins un premier critère de composition de groupe qui définit un ou plusieurs types de modèle pouvant être inclus dans ledit groupe d'unités de capteurs, et
la détermination dudit groupe d'unités de capteurs tient uniquement compte de celles des une ou plusieurs autres unités de capteurs pour lesquelles un type de modèle correspondant à l'un desdits un ou plusieurs types de modèle est indiqué,
chaque type de modèle indiquant un type d'espace auquel le modèle de groupement d'unités de capteurs respectif est destiné.

9. Unité de capteurs (110-k) selon l'une quelconque des revendications 1 à 8, dans laquelle la partie de commande de capteurs (114-k) est agencée pour sélectionner le modèle de groupement d'unités de capteurs parmi une pluralité de modèles de groupement d'unités de capteurs prédéfinis différents qui définissent des ensembles respectifs différents d'un ou de plusieurs critères de groupement qui sont considérés comme adaptés pour des espaces de types différents et/ou de finalités différentes.

10. Unité de capteurs (110-k) selon l'une quelconque des revendications 1 à 9, dans laquelle le modèle de groupement d'unités de capteurs définit en outre un ou plusieurs paramètres de commande de groupe et dans laquelle la partie de commande de capteurs (114-k) est agencée pour :
commander les émissions lumineuses respectives desdits un ou plusieurs luminaires (120-j, 170-k) sur la base des données de capteurs reçues en provenance de la partie capteurs (111-k) conformément à un ou plusieurs paramètres de commande d'éclairage prédéfinis définis pour l'unité de capteurs (110-k) ; et
commander les émissions lumineuses respectives desdits un ou plusieurs luminaires (120-j, 170-k) sur la base des indications d'état reçues en provenance de l'au moins une autre unité de capteurs affectée audit groupe d'unités de capteurs conformément aux un ou plusieurs paramètres de commande de groupe.

11. Unité de capteurs (110-k) selon la revendication 10, dans laquelle lesdits un ou plusieurs paramètres de commande d'éclairage prédéfinis définissent une intensité lumineuse cible prédéfinie pour les un ou plusieurs luminaires (120-j, 170-k) et lesdits un ou plusieurs paramètres de commande de groupe définissent une intensité lumineuse cible secondaire pour les un ou plusieurs luminaires (120-j, 170-k) qui est différente de ladite intensité lumineuse cible prédéfinie.

12. Unité de capteurs (110-k) selon la revendication 10 ou 11, dans laquelle lesdits un ou plusieurs paramètres de commande d'éclairage prédéfinis définissent une courbe de gradation prédéfinie pour l'extinction de l'émission lumineuse respective pour les un ou plusieurs luminaires (120-j, 170-k) et lesdits un ou plusieurs paramètres de commande de groupe définissent une courbe de gradation secondaire pour l'extinction de l'émission lumineuse respective pour les un ou plusieurs luminaires (120-j, 170-k) qui est différente de ladite courbe de gradation prédéfinie.

13. Unité de capteurs (110-k) selon l'une quelconque des revendications 1 à 12, dans laquelle les un ou plusieurs critères de groupement comprennent au moins un critère de composition de groupe et dans laquelle la partie de commande de capteurs (114-k) est agencée en outre pour :
recevoir, en provenance des une ou plusieurs autres unités de capteurs, des mesures de distance distantes respectives dérivées au niveau de l'autre unité de capteurs respective pour une ou plusieurs unités de capteurs supplémentaires, chaque mesure de distance distante décrivant une distance entre l'autre unité de capteurs respective et l'unité de capteurs supplémentaire respective ;
recevoir, en provenance des une ou plusieurs autres unités de capteurs, des informations qui définissent un groupe d'unités de capteurs respectif déterminé pour l'autre unité de capteurs respective ; et
modifier le groupe d'unités de capteurs déterminé pour l'unité de capteurs (110-k) conformément à l'au moins un critère de composition de groupe compte tenu des groupes d'unités de capteurs respectifs déterminés pour les une ou plusieurs autres unités de capteurs et compte tenu des mesures de distance locales et distantes.

14. Luminaire (170-k) comprenant une unité de capteurs (110-k) selon l'une quelconque des revendications 1 à 13.

15. Procédé (200), dans une unité de capteurs (110-k), de commande d'émissions lumineuses respectives d'un ou de plusieurs luminaires (120-j, 170-k) pour éclairer des endroits respectifs d'un espace, le procédé (200) comprenant :
l'obtention (202) d'un ou de plusieurs critères de groupement pour déterminer un groupe d'unités de capteurs pour l'unité de capteurs (110-k), lesdits un ou plusieurs critères de groupement comprenant au moins un critère de distance ;
la dérivation (204) d'une mesure de distance locale respective pour une ou plusieurs autres unités de capteurs sur la base d'un ou de plusieurs messages reçus en provenance de celles-ci au niveau d'une partie de communication (113-k) de l'unité de capteurs (110-k), chaque mesure de distance locale décrivant une distance entre l'unité de capteurs (110-k) et l'autre unité de capteurs respective ;
la détermination (208) du groupe d'unités de capteurs pour l'unité de capteurs (110-k) en lui affectant, conformément à l'au moins un critère de distance, au moins l'une des une ou plusieurs autres unités de capteurs sur la base de la mesure de distance locale dérivée pour celles-ci ; et
la commande (214) des émissions lumineuses respectives des un ou plusieurs luminaires (120-j, 170-k) sur la base des données de capteurs reçues en provenance de la partie capteurs (111-k) et sur la base en outre d'indications d'état reçues via la partie de communication (113-k) en provenance de l'au moins une autre unité de capteurs affectée audit groupe d'unités de capteurs pour l'unité de capteurs (110-k),
**caractérisé en ce que** l'obtention d'un ou de plusieurs critères de groupement comprend l'obtention d'un modèle de groupement d'unités de capteurs qui définit lesdits un ou plusieurs critères de groupement en indiquant une sélection des un ou plusieurs critères de groupement parmi une pluralité de critères de groupement prédéfinis disponibles pour l'unité de capteurs (110-k).
